# FASCICULE DE BREVET EUROPEEN

(11) **EP 3 439 244 B1**
(45) Date de publication et mention de la délivrance du brevet: **18.09.2019**
(21) Numéro de dépôt: 18182086.1
(22) Date de dépôt: 06.07.2018
(51) Int. Cl.: H04L 12/40, H02J 4/00, H04L 12/46

(54) **ELÉMENT MODULAIRE POUR UN RÉSEAU MIXTE D'UN AÉRONEF**
MODULARES ELEMENT FÜR EIN GEMISCHTES LUFTFAHRZEUGNETZWERK
MODULAR ELEMENT FOR A MIXED AIRCRAFT NETWORK

(30) Priorité: 02.08.2017 FR 1757396; 06.11.2017 FR 1760372
(43) Date de publication de la demande: 06.02.2019
(60) Demande divisionnaire: 19176678.1
(73) Titulaire: Airbus Operations S.A.S., 31060 Toulouse (FR); Airbus Operations GmbH, 21129 Hamburg (DE)
(72) Inventeur: MORIN, Thomas, 31490 LEGUEVIN (FR); HINTZE, Hartmut, 21493 SCHWARZENBEK (DE); BROWNJOHN, Nicholas, 21614 BUXTEHUDE (DE); JACQUEMOUD-COLLET, Jonathan, 31400 TOULOUSE (FR)
(74) Mandataire: Sarraméa, Claude

(56) Documents cités:
- EP-A2- 2 431 277
- US-A1- 2010 284 117
- US-A1- 2012 091 789

## Description

La présente invention concerne le domaine de l'alimentation électrique d'équipements d'un aéronef. Les aéronefs, en particulier les aéronefs de transport, comportent des équipements électriques répartis notamment dans leur fuselage. Ces équipements électriques doivent être alimentés électriquement et, pour une partie d'entre eux, doivent être reliés à un réseau de communication de données. Pour cela, les aéronefs comportent des harnais de câbles de puissance électrique et de câbles de communication de données. Les harnais de câbles de puissance électrique s'étendent généralement entre un coeur électrique de l'aéronef (permettant notamment l'arrivée de puissance électrique depuis des sources de génération et/ou de conversion de puissance électrique) et les équipements électriques à alimenter. Les harnais de câbles de communication s'étendent généralement entre des équipements de communication de l'aéronef, par exemple un commutateur conforme au standard ARINC 664 part 7, et les équipements électriques reliés à ces équipements de communication.

Dans les aéronefs modernes, de plus en plus de fonctions sont mises en oeuvre de façon électrique. Ces fonctions nécessitent parfois des tensions électriques davantage variées que dans les anciennes générations d'aéronefs (par exemple 28VDC, 115VAC, 230VAC, 270VDC, 540VDC, etc.), ainsi que de nombreuses liaisons de communications de données entre différents équipements de l'aéronef. Il en résulte que les harnais sont plus complexes, plus volumineux et de masse plus élevée que dans les anciennes générations d'aéronefs. La mise en oeuvre des harnais est également plus complexe. Par conséquent, il serait souhaitable de simplifier la distribution d'énergie électrique et les liaisons de données des équipements électriques des aéronefs.

Les différents harnais sont spécifiques à chaque type d'aéronef et sont également fonction d'une configuration de l'aéronef spécifique à la compagnie aérienne exploitant cet aéronef. Par exemple, selon que certains équipements électriques sont installés ou ne sont pas installés dans le fuselage, les harnais comportent ou ne comportent pas des câbles permettant l'alimentation électrique et des liaisons de données desdits équipements. Il en résulte que la liste des équipements électriques devant être installés dans un aéronef particulier doit être définie et figée suffisamment tôt avant la fabrication dudit aéronef de façon à pouvoir concevoir, fabriquer et installer à temps les harnais spécifiques à cet aéronef. Cette liste doit être définie d'autant plus tôt que les aéronefs sont généralement fabriqués par assemblage de tronçons de fuselage dans lesquels sont préinstallés des tronçons de harnais qui sont connectés entre eux après l'assemblage des tronçons de fuselage. Or, il serait souhaitable de pouvoir modifier la liste des équipements électriques devant être installés dans l'aéronef jusqu'à un stade plus avancé de fabrication dudit aéronef.

D'autre part, les harnais étant fabriqués de façon spécifique en fonction de la liste des équipements électriques installés dans l'aéronef, ainsi que des positions dans le fuselage desdits équipements, une modification de la configuration de l'aéronef après sa livraison à une compagnie aérienne est difficile. Or, une telle modification peut être nécessaire, par exemple lors d'une revente de l'aéronef à une autre compagnie aérienne ou si la compagnie aérienne souhaite ajouter de nouveaux équipements électriques dans l'aéronef. Par conséquent, il serait souhaitable de pouvoir modifier plus facilement la liste et les positions des équipements électriques d'un aéronef.

Le document US2012/091789 divulgue un élément modulaire pour un réseau mixte de distribution de puissance électrique et de communication de données d'un aéronef qui comporte un tronçon de jeu de barres de distribution de puissance électrique et un ensemble de liaisons de données. Le tronçon de jeu de barre comporte des points de connexion à différents emplacement répartis selon sa longueur et l'ensemble de liaisons de données comporte également des points de connexion à différents emplacement répartis selon sa longueur, disposés chacun à proximité d'un point de connexion du tronçon de jeu de barres.

### EXPOSE DE L'INVENTION :

La présente invention a notamment pour but d'apporter une solution, au moins partiellement, à ces problèmes.

Selon un premier aspect de l'invention, l'invention concerne un aéronef comportant :
- un fuselage ;
- un ensemble de générateurs électriques, comprenant au moins un premier générateur électrique et un deuxième générateur électrique ;
- un ensemble d'équipements électriques, répartis dans le fuselage ; et
- un réseau de distribution de puissance électrique comportant :
   - un ensemble de jeux de barres, comprenant au moins un premier jeu de barres et un deuxième jeu de barres ; et
   - un système de commutation,

Cet aéronef est remarquable en ce que :
- chaque jeu de barres de l'ensemble de jeux de barres s'étend, au moins en partie, selon une direction longitudinale du fuselage ;
- le premier jeu de barres et le deuxième jeu de barres empruntent des chemins ségrégués dans le fuselage ;
- le système de commutation est relié électriquement au premier générateur électrique et au deuxième générateur électrique, ainsi qu'au premier jeu de barres et au deuxième jeu de barres ;
- le système de commutation comporte un mode de fonctionnement dit normal, dans lequel il est configuré pour relier électriquement le premier générateur électrique au premier jeu de barres et le deuxième générateur électrique au deuxième jeu de barres ;
- chaque jeu de barres de l'ensemble de jeux de barres comporte des points de connexion à différents emplacements répartis selon sa longueur ; et
- chacun des équipements électriques de l'ensemble d'équipements électriques est relié à un point de connexion d'un jeu de barres de l'ensemble de jeux de barres, via une liaison d'alimentation électrique locale.

L'ensemble de jeux de barres correspond à une infrastructure invariante du réseau de distribution de puissance électrique de l'aéronef. Les différents équipements électriques sont reliés chacun à un point de connexion d'un jeu de barres par une liaison d'alimentation électrique locale. Il est ainsi possible d'ajouter facilement un nouvel équipement électrique dans le fuselage, sans modifier cette infrastructure : il suffit pour cela de mettre en place une liaison d'alimentation électrique locale entre ce nouvel équipement et un point de connexion d'un jeu de barres. De préférence, ce point de connexion est choisi le plus proche possible, sur le jeu de barres considéré, du nouvel équipement électrique, afin notamment de faciliter la mise en place de la liaison d'alimentation électrique locale entre l'équipement électrique et le jeu de barres. Cet ajout d'un nouvel équipement électrique peut être prévu aussi bien pendant la fabrication de l'aéronef, que lors d'une modification de la configuration de l'aéronef après sa livraison à une compagnie aérienne. Il est également aisé de déplacer un équipement électrique dans le fuselage de l'aéronef, par exemple lors d'une modification de la configuration de l'aéronef : il suffit pour cela de retirer sa liaison d'alimentation électrique locale d'origine, d'amener l'équipement électrique à sa nouvelle position dans le fuselage et de mettre en place une nouvelle liaison d'alimentation électrique locale vers un autre point de connexion d'un jeu de barres. L'utilisation d'un ensemble de jeu de barres plutôt que de harnais de câbles permet également de réduire la masse ainsi que le coût du réseau de distribution de puissance électrique de l'aéronef. En effet, les conducteurs électriques d'un jeu de barres utilisés de façon commune par plusieurs équipements électriques nécessitent un dimensionnement moindre que la somme des dimensionnements de câbles distincts, dans des harnais, alimentant ces mêmes équipements électriques. Etant donné que le premier jeu de barres et le deuxième jeu de barres empruntent des chemins ségrégués dans le fuselage, dans le mode de fonctionnement normal ces deux jeux de barres sont complètement indépendants l'un de l'autre et ils ne risquent pas d'être exposés à une panne ou à un endommagement commun (par exemple en cas d'éclatement moteur...). Ainsi, l'alimentation électrique des équipements électriques reliés à un jeu de barres est totalement indépendante de l'autre jeu de barres. Par conséquent, en cas de panne affectant l'un des jeux de barres, seuls des équipements électriques reliés à des points de connexion de ce jeu de barres risquent d'être privés d'alimentation électrique. Les équipements électriques reliés à l'autre jeu de barres continuent alors d'être alimentés normalement puisque leur alimentation électrique est totalement indépendante du jeu de barres affecté par la panne.

Selon différents modes de réalisation pouvant être mis en oeuvre isolément ou combinés entre eux :
- le premier jeu de barres s'étend également en partie dans une première aile de l'aéronef et le deuxième jeu de barres s'étend également en partie dans une deuxième aile de l'aéronef ;
- le premier générateur électrique et le deuxième générateur électrique sont reliés électriquement au système de commutation via des jeux de barres. De façon avantageuse, le premier générateur électrique est relié électriquement au système de commutation via des conducteurs dédiés du premier jeu de barres et le deuxième générateur électrique est relié électriquement au système de commutation via des conducteurs dédiés du deuxième jeu de barres ;
- le réseau de distribution de puissance électrique comporte en outre un troisième jeu de barres et un quatrième jeu de barres qui s'étendent, au moins en partie, selon une direction longitudinale du fuselage, les premier, deuxième, troisième et quatrième jeux de barres empruntant des chemins ségrégués dans le fuselage de l'aéronef. De façon avantageuse, l'ensemble de générateurs électriques comprend en outre un troisième générateur électrique et un quatrième générateur électrique et, dans le mode de fonctionnement normal, le système de commutation est configuré pour relier électriquement le troisième générateur électrique au troisième jeu de barres et le quatrième générateur électrique au quatrième jeu de barres ;
- le système de commutation comporte un mode de fonctionnement dit reconfiguré, susceptible d'être activé en cas de survenance d'une panne dans le réseau de distribution de puissance électrique, dans lequel il est configuré pour :
   - établir des liaisons électriques entre les générateurs électriques de l'ensemble de générateurs électriques et les jeux de barres de l'ensemble de jeux de barres, ces liaisons électriques étant modifiées par rapport à des liaisons électriques établies dans le mode de fonctionnement normal ; et/ou
   - établir des liaisons électriques entre des jeux de barres de l'ensemble de jeux de barres ;
- le système de commutation comprend un dispositif de commutation principal et au moins un dispositif de commutation secondaire déporté du dispositif de commutation principal. De façon avantageuse, dans le mode de fonctionnement reconfiguré du système de commutation, l'au moins un dispositif de commutation secondaire est susceptible d'être commandé pour établir une ou plusieurs liaisons électriques entre des jeux de barres de l'ensemble de jeux de barres ;
- au moins un des jeux de barres de l'ensemble de jeux de barres comprend au moins deux tronçons modulaires disposés bout à bout et reliés électriquement entre eux. De façon avantageuse, un dispositif de commutation secondaire est relié électriquement à deux tronçons modulaires consécutifs d'un jeu de barres, de façon à établir des liaisons électriques entre des conducteurs électriques similaires des deux tronçons modulaires dans le mode de fonctionnement normal et à établir des liaisons électriques entre d'une part des conducteurs électriques d'au moins un des deux tronçons modulaires et d'autre part des conducteurs électriques d'un autre jeu de barres, dans le mode de fonctionnement reconfiguré.

Selon un deuxième aspect de l'invention, l'invention concerne un élément modulaire pour un réseau mixte de distribution de puissance électrique et de communication de données d'un aéronef. Cet élément modulaire est remarquable en ce qu'il comporte :
- un tronçon d'un jeu de barres de distribution de puissance électrique, s'étendant selon une longueur de l'élément modulaire ; et
- un ensemble de liaisons de données, cet ensemble de liaisons de données s'étendant selon ladite longueur de l'élément modulaire, de façon parallèle au tronçon de jeu de barres,
et en ce que :
- le tronçon de jeu de barres comporte des points de connexion à différents emplacements répartis selon sa longueur ;
- l'ensemble de liaisons de données comporte des points de connexion à différents emplacements répartis selon sa longueur et disposés chacun à proximité d'un point de connexion du tronçon de jeu de barres ;
- l'ensemble de liaisons de données comporte un point de connexion, dit point de brassage, prévu pour recevoir une baie de brassage ;
- l'ensemble de liaisons de données comporte au moins une liaison de données entre d'une part chacun des points de connexion répartis selon sa longueur et d'autre part le point de brassage ;
- le tronçon de jeu de barres et l'ensemble de liaisons de données comportent chacun un premier point d'interconnexion prévu pour relier le tronçon de jeu de barres et l'ensemble de liaisons de données respectivement à un tronçon de jeu de barres et à un ensemble de liaisons de données d'un premier autre élément modulaire disposé longitudinalement en série avec l'élément modulaire, à une première extrémité longitudinale de l'élément modulaire ; et
- le tronçon de jeu de barres et l'ensemble de liaisons de données comportent chacun un deuxième point d'interconnexion prévu pour relier le tronçon de jeu de barres et l'ensemble de liaisons de données respectivement à un tronçon de jeu de barres et à un ensemble de liaisons de données d'un deuxième autre élément modulaire disposé longitudinalement en série avec l'élément modulaire, à une deuxième extrémité longitudinale de l'élément modulaire opposée à la première extrémité longitudinale.

L'assemblage d'éléments modulaires conformes à l'invention permet de construire un réseau mixte de distribution de puissance électrique et de communication de données d'un aéronef. En ce qui concerne la distribution de puissance électrique, ce réseau présente les mêmes avantages que ceux décrits en référence au premier aspect de l'invention. Ce réseau présente également des avantages similaires en ce qui concerne la communication de données. L'utilisation d'éléments modulaires conformes à l'invention pour construire le réseau permet d'adapter facilement ce réseau à n'importe quel type d'aéronef, sans nécessiter de jeux de barres ou d'ensembles de liaisons de données spécifiques à l'aéronef considéré, en particulier en ce qui concerne leur longueur. L'utilisation d'un ou de quelques types d'éléments modulaires de longueurs prédéterminées permet d'adapter un tel réseau à tout aéronef, et aussi de mutualiser et de minimiser les coûts de développement.

Selon différents modes de réalisation pouvant être mis en oeuvre isolément ou combinés entre eux :
- les liaisons de données correspondent à des fibres optiques ;
- le point de brassage comporte un sous-ensemble de liaisons de données terminées par au moins un connecteur, dit connecteur de brassage, prévu pour être intégré dans la baie de brassage. De façon avantageuse, le point de brassage comporte en outre au moins une fixation prévue pour permettre la fixation de la baie de brassage sur l'élément modulaire. De façon avantageuse encore :
   - le point de brassage d'une part et le premier point d'interconnexion de l'ensemble de liaisons de données d'autre part sont situés à proximité de la première extrémité longitudinale de l'élément modulaire ;
   - le premier point d'interconnexion de l'ensemble de liaisons de données comporte un sous-ensemble de liaisons de données terminées par au moins un connecteur, dit premier connecteur d'interconnexion ; et
   - l'agencement du point de brassage et du premier point d'interconnexion est prévu pour permettre l'intégration du connecteur de brassage et du premier connecteur d'interconnexion dans la baie de brassage, de façon à permettre de relier l'ensemble de liaisons de données à l'ensemble de liaisons de données du premier autre élément modulaire, dans la baie de brassage ;
- l'élément modulaire est tel que :
   - les points de connexion répartis le long du tronçon de jeu de barres et les points de connexion répartis le long de l'ensemble de liaisons de données, disposés chacun à proximité d'un point de connexion du tronçon de jeu de barres, forment des couples de points de connexion répartis le long de l'élément modulaire ; et
   - chaque couple de points de connexion est prévu pour recevoir une boîte de dérivation mixte de distribution de puissance électrique et de communication de données configurée pour permettre le raccordement d'une ou de plusieurs liaisons locales de distribution d'alimentation électrique et/ou de distribution de données vers un ou plusieurs équipements électriques de l'aéronef ;
- le tronçon de jeu de barres comporte au moins une partie flexible prévue pour permettre des déformations de l'élément modulaire en réponse à des déformations d'un fuselage d'un aéronef lorsque l'élément modulaire est installé dans ledit fuselage d'un aéronef.

L'invention est également relative à un aéronef comportant un fuselage et un ensemble d'équipements électriques répartis dans le fuselage. Cet aéronef est remarquable en ce que :
- l'aéronef comporte un réseau mixte de distribution de puissance électrique et de communication de données comprenant un ensemble d'éléments modulaires tels que précités ; et
- chacun des équipements électriques de l'ensemble d'équipements électriques est relié à un point de connexion du tronçon de jeu de barres d'un élément modulaire via une liaison d'alimentation électrique locale et/ou à un point de connexion de l'ensemble de liaisons de données dudit élément modulaire par une liaison de données locale.

Dans un mode particulier de réalisation :
- des éléments modulaires d'un premier sous-ensemble de l'ensemble d'éléments modulaires sont assemblés entre eux de façon à former un premier sous-réseau mixte de distribution de puissance électrique et de communication de données s'étendant, au moins en partie, longitudinalement dans le fuselage de l'aéronef ;
- des éléments modulaires d'un deuxième sous-ensemble de l'ensemble d'éléments modulaires sont assemblés entre eux de façon à former un deuxième sous-réseau mixte de distribution de puissance électrique et de communication de données s'étendant, au moins en partie, longitudinalement dans le fuselage de l'aéronef ; et
- le premier sous-réseau et le deuxième sous-réseau empruntent des chemins ségrégués dans le fuselage.

Dans un autre mode particulier de réalisation pouvant être combiné avec le précédent, deux éléments modulaires consécutifs sont reliés entre eux électriquement au moyen :
- d'au moins une connexion flexible ; ou
- d'au moins un élément de connexion configuré pour coulisser sur le tronçon d'un jeu de barres d'au moins l'un des deux éléments modulaires.

Dans encore un mode particulier de réalisation pouvant être combiné avec les précédents, la baie de brassage d'un élément modulaire reçoit :
- un connecteur d'interconnexion du premier autre élément modulaire ; et
- un ensemble de liaisons entre le premier connecteur d'interconnexion de l'élément modulaire et le connecteur d'interconnexion du premier autre élément modulaire.

Selon un troisième aspect de l'invention, l'invention concerne un aéronef comportant :
- un fuselage ;
- un ensemble d'équipements électriques, répartis dans le fuselage ; et
- un réseau mixte de distribution de puissance électrique et de communication de données.

Cet aéronef est remarquable en ce que :
- le réseau mixte de distribution de puissance électrique et de communication de données comporte :
   - un ensemble de jeux de barres, comprenant au moins un jeu de barres de distribution de puissance électrique ; et
   - au moins un ensemble de liaisons de données,
- le réseau mixte de distribution de puissance électrique et de communication de données est configuré de telle façon qu'un ensemble de liaisons de données est associé à chaque jeu de barres de l'ensemble de jeux de barres ;
- chaque jeu de barres de l'ensemble de jeux de barres s'étend, au moins en partie, selon une direction longitudinale du fuselage ;
- chaque ensemble de liaisons de données s'étend de façon sensiblement parallèle au jeu de barres auquel il est associé ;
- chaque jeu de barres de l'ensemble de jeux de barres comporte des points de connexion à différents emplacements répartis selon sa longueur ; et
- chaque ensemble de liaisons de données comporte des points de connexion à différents emplacements répartis selon sa longueur et disposés chacun à proximité d'un point de connexion du jeu de barres auquel est associé l'ensemble de liaisons de données, de façon à former des couples de points de connexion comprenant chacun un point de connexion du jeu de barres et un point de connexion de l'ensemble de liaisons de données associé ; et
- chacun des équipements électriques de l'ensemble d'équipements électriques est relié à un couple de points de connexion via une liaison d'alimentation électrique locale et/ou via une liaison de données locale.

Comme pour le premier aspect de l'invention, l'ensemble de jeux de barres correspond à une infrastructure invariante du réseau de distribution de puissance électrique de l'aéronef. Il présente les mêmes avantages que ceux décrits en référence au premier aspect de l'invention. L'au moins un ensemble de liaisons de données correspond à infrastructure invariante du réseau de communication de données. Les équipements électriques qui nécessitent une liaison de communication de données sont reliés chacun à un point de connexion de l'ensemble de liaisons de données par une liaison de données locale. Cela présente des avantages similaires à ceux du réseau de distribution de puissance électrique en ce qui concerne l'ajout ou le déplacement d'équipements électriques. Lorsqu'un équipement nécessite à la fois une alimentation électrique et une liaison de données, le fait que chaque point de connexion de l'ensemble de liaisons de données soit situé à proximité d'un point de connexion du jeu de barres auquel est associé l'ensemble de liaisons de données, permet de faciliter le raccordement de l'équipement à l'infrastructure du réseau de distribution de puissance électrique et à l'infrastructure du réseau de communication de données : la liaison d'alimentation électrique locale et la liaison de données locale peuvent ainsi cheminer ensemble entre l'équipement électrique et lesdits points de connexion.

Dans un mode de réalisation, le réseau mixte de distribution de puissance électrique et de communication de données comporte un ensemble de boîtes de dérivation, chaque boîte de dérivation étant raccordée à un couple de points de connexion. De façon avantageuse, une boîte de dérivation de l'ensemble de boîtes de dérivation comporte :
- au moins un connecteur d'alimentation électrique configuré pour coopérer avec le point de connexion du jeu de barres appartenant au couple de points de connexion auquel est raccordée la boîte de dérivation ;
- au moins un connecteur de liaisons de données configuré pour coopérer avec le point de connexion de l'ensemble de liaisons de données appartenant au couple de points de connexion auquel est raccordée la boîte de dérivation ; et
- un ensemble d'emplacements prévus pour recevoir des modules d'interface ;
- un ensemble de liaisons électriques s'étendant entre le connecteur d'alimentation électrique et les différents emplacements prévus pour recevoir les modules d'interface ; et
- un ensemble de liaisons de données s'étendant entre le connecteur de liaisons de données et les différents emplacements prévus pour recevoir les modules d'interface.

De façon avantageuse encore, l'aéronef comporte :
- au moins un module d'interface électrique dans un emplacement de la boîte de dérivation et/ou au moins un module d'interface de liaison de données dans un emplacement de la boîte de dérivation ; et
- au moins une liaison d'alimentation électrique locale entre ledit au moins un module d'interface électrique et un équipement électrique de l'aéronef et/ou au moins une liaison de données locale entre ledit au moins un module d'interface de liaison de données et un équipement électrique de l'aéronef.

Le module d'interface électrique est par exemple choisi parmi l'ensemble suivant :
- un module de connexion électrique ;
- un module de commutation électrique ;
- un module de conversion de tension électrique ; et
- un module de protection électrique.

Le module d'interface de liaison de données est par exemple choisi parmi l'ensemble suivant :
- un module de connexion de liaisons de données ;
- un module de conversion de liaisons de données ;
- un module de liaison de données sans fil ; et
- un module d'acquisition et de concentration de données.

De façon avantageuse, l'aéronef comporte, dans un emplacement de la boîte de dérivation, un module d'interface mixte assurant une fonction de module d'interface électrique et une fonction de module d'interface de liaison de données.

De façon avantageuse encore, l'aéronef est tel que :
- les liaisons de données de l'ensemble de liaisons de données associé au jeu de barres correspondent à des fibres optiques ;
- l'ensemble de liaisons de données s'étendant entre le connecteur de liaisons de données et les différents emplacements prévus pour recevoir les modules d'interface comprend :
   - un convertisseur de liaisons de données ;
   - des liaisons de données par fibres optiques, entre le connecteur de liaisons de données et le convertisseur de liaisons de données ;
   - des liaisons de données utilisant des signaux électriques, entre le convertisseur de liaisons de données et les différents emplacements prévus pour recevoir les modules d'interface.

Dans un mode particulier de réalisation pouvant être combiné avec les précédents :
- au moins un jeu de barres de l'ensemble de jeux de barres comprend au moins deux tronçons modulaires disposés bout à bout et reliés électriquement entre eux ;
- chacun des au moins deux tronçons modulaires de l'au moins un jeu de barres fait partie d'un élément modulaire comprenant également un ensemble de liaisons de données s'étendant de façon sensiblement parallèle au tronçon modulaire considéré ; et
- les ensembles de liaisons de données d'éléments modulaires consécutifs sont reliés entre eux de façon à former l'ensemble de liaisons de données associé au jeu de barres considéré.

Selon un quatrième aspect de l'invention, l'invention concerne un élément modulaire pour un réseau de distribution de puissance électrique d'un aéronef.

Cet élément modulaire est remarquable en ce qu'il comporte un tronçon d'un jeu de barres de distribution de puissance électrique, s'étendant selon une longueur de l'élément modulaire, et en ce que :
- le tronçon de jeu de barres comporte des points de connexion à différents emplacements répartis selon sa longueur ;
- le tronçon de jeu de barres comporte un premier point d'interconnexion prévu pour relier le tronçon de jeu de barres à un tronçon de jeu de barres d'un premier autre élément modulaire disposé longitudinalement en série avec l'élément modulaire, à une première extrémité longitudinale de l'élément modulaire ;
- le tronçon de jeu de barres comporte un deuxième point d'interconnexion prévu pour relier le tronçon de jeu de barres à un tronçon de jeu de barres d'un deuxième autre élément modulaire disposé longitudinalement en série avec l'élément modulaire, à une deuxième extrémité longitudinale de l'élément modulaire opposée à la première extrémité longitudinale ;
- le tronçon de jeu de barres comprenant un ensemble de conducteurs électriques, ces conducteurs électriques du tronçon de jeu de barres sont logés dans une enveloppe correspondant à une pièce structurelle de l'aéronef ; et
- ladite enveloppe comporte des ouvertures en regard des points de connexion du tronçon de jeu de barres, de façon à permettre le raccordement d'au moins un équipement électrique de l'aéronef au tronçon de jeu de barres au moyen d'une liaison électrique locale.

L'assemblage d'éléments modulaires conformes à l'invention permet de construire un réseau de distribution de puissance électrique d'un aéronef. En ce qui concerne la distribution de puissance électrique, ce réseau présente les mêmes avantages que ceux décrits en référence au premier et au deuxième aspects de l'invention. Les éléments modulaires conformes à l'invention comportant une enveloppe correspondant à une pièce structurelle de l'aéronef, c'est-à-dire une pièce participant à la structure mécanique de l'aéronef, il en résulte un gain de masse de l'aéronef. En effet, ces éléments modulaires ne nécessitent pas une enveloppe spécifique pour protéger et isoler leurs conducteurs électriques.

Selon différents modes de réalisation pouvant être mis en oeuvre isolément ou combinés entre eux :
- ladite pièce structurelle de l'aéronef est prévue pour coopérer avec une fixation d'au moins un coffre à bagages de l'aéronef pour supporter ce coffre à bagages ;
- ladite pièce structurelle de l'aéronef correspond à un tronçon de rail de plancher de l'aéronef ;
- au moins l'un du premier et du deuxième points d'interconnexion comporte un connecteur prévu pour absorber par coulissement des mouvements relatifs entre d'une part l'élément modulaire et d'autre part respectivement le premier ou le deuxième autre élément modulaire ;
- l'élément modulaire est prévu pour un réseau mixte de distribution de puissance électrique et de communication de données d'un aéronef et il comporte un ensemble de liaisons de données, cet ensemble de liaisons de données s'étendant selon la longueur de l'élément modulaire, de façon sensiblement parallèle au tronçon de jeu de barres. L'élément modulaire est tel que :
   - l'ensemble de liaisons de données comporte des points de connexion à différents emplacements répartis selon sa longueur et disposés chacun à proximité d'un point de connexion du tronçon de jeu de barres ;
   - l'ensemble de liaisons de données comporte un point de connexion, dit point de brassage, prévu pour recevoir une baie de brassage ;
   - l'ensemble de liaisons de données comporte au moins une liaison de données entre d'une part chacun des points de connexion répartis selon sa longueur et d'autre part le point de brassage ;
   - l'ensemble de liaisons de données comporte un premier point d'interconnexion prévu pour relier l'ensemble de liaisons de données à un ensemble de liaisons de données d'un premier autre élément modulaire disposé longitudinalement en série avec l'élément modulaire, à une première extrémité longitudinale de l'élément modulaire ; et
   - l'ensemble de liaisons de données comporte un deuxième point d'interconnexion prévu pour relier l'ensemble de liaisons de données à un ensemble de liaisons de données d'un deuxième autre élément modulaire disposé longitudinalement en série avec l'élément modulaire, à une deuxième extrémité longitudinale de l'élément modulaire opposée à la première extrémité longitudinale.

L'invention est également relative à un aéronef comportant un fuselage et un ensemble d'équipements électriques répartis dans le fuselage. Cet aéronef est remarquable en ce que :
- l'aéronef comporte un réseau de distribution de puissance électrique comprenant un ensemble d'éléments modulaires tels que précité ; et
- chacun des équipements électriques de l'ensemble d'équipements électriques est relié à un point de connexion du tronçon de jeu de barres d'un élément modulaire via une liaison d'alimentation électrique locale.

Dans un mode particulier de réalisation :
- des éléments modulaires d'un premier sous-ensemble de l'ensemble d'éléments modulaires sont assemblés entre eux de façon à former un premier sous-réseau de distribution de puissance électrique s'étendant, au moins en partie, longitudinalement dans le fuselage de l'aéronef ;
- des éléments modulaires d'un deuxième sous-ensemble de l'ensemble d'éléments modulaires sont assemblés entre eux de façon à former un deuxième sous-réseau de distribution de puissance électrique s'étendant, au moins en partie, longitudinalement dans le fuselage de l'aéronef ; et
- le premier sous-réseau et le deuxième sous-réseau empruntent des chemins ségrégués dans le fuselage.

Dans un autre mode particulier de réalisation pouvant être combiné avec le précédent :
- deux éléments modulaires consécutifs sont reliés entre eux électriquement au moyen d'au moins un élément de connexion configuré pour coulisser sur le tronçon d'un jeu de barres d'au moins l'un des deux éléments modulaires ;

Dans d'autres modes particuliers de réalisation pouvant être combinés avec les précédents :
- l'aéronef comporte un ensemble de coffres à bagages fixés à des éléments modulaires de l'ensemble d'éléments modulaires ;
- l'aéronef comporte un plancher comprenant un rail dont au moins une partie est formée d'un ensemble d'éléments modulaires.

### DESCRIPTION DETAILLEE :

L'invention sera mieux comprise à la lecture de la description qui suit et à l'examen des figures annexées.
La figure 1 représente schématiquement un aéronef comportant un réseau de distribution de puissance électrique, conforme à un mode de réalisation de l'invention ;
La figure 2 représente schématiquement un aéronef comportant un réseau de distribution de puissance électrique, conforme à un autre mode de réalisation de l'invention ;
La figure 3 est une vue en coupe prise le long de la ligne IIa-IIa de la figure 2 ;
La figure 4 est une vue en perspective d'un jeu de barres ;
La figure 5 est une vue schématique d'une partie du fuselage de l'aéronef représenté sur la figure 1 ;
Les figures 6a et 6b représentent, de façon schématique, une partie du réseau de distribution de puissance électrique de l'aéronef représenté sur la figure 2, comprenant des commutateurs secondaires conformément à un mode particulier de réalisation ;
Les figures 7a et 7b représentent, de façon schématique, une partie du réseau de distribution de puissance électrique de l'aéronef représenté sur la figure 1 ou sur la figure 2, comprenant des commutateurs secondaires conformément à un mode particulier de réalisation ;
La figure 8 représente schématiquement un élément modulaire pour un réseau mixte de distribution de puissance électrique et de communication de données d'un aéronef, conforme à un mode de réalisation de l'invention ;
La figure 9 représente schématiquement un élément modulaire pour un réseau mixte de distribution de puissance électrique et de communication de données d'un aéronef, conforme à un autre mode de réalisation de l'invention ;
Les figures 10 et 11 représentent des liaisons de données des éléments modulaires correspondant respectivement aux figures 8 et 9 ;
La figure 12 représente un exemple d'interconnexion de deux éléments modulaires ;
La figure 13 représente schématiquement un élément modulaire équipé de boîtes de dérivation ;
La figure 14 représente schématiquement un aéronef comportant un réseau mixte de distribution de puissance électrique et de communication de données, comprenant un ensemble d'éléments modulaires ;
La figure 15 représente schématiquement un aéronef comportant un réseau mixte de distribution de puissance électrique et de communication de données, conforme à un mode de réalisation de l'invention ;
La figure 16 représente schématiquement un jeu de barres du réseau mixte de la figure 15, ainsi qu'un ensemble de liaisons de données associé à ce jeu de barres ;
La figure 17 représente schématiquement le jeu de barres et l'ensemble de liaisons de données de la figure 16, équipés de boîtes de dérivation ;
Les figures 18 et 19 représentent schématiquement deux exemples de boîtes de dérivation conformes à des modes de réalisation de l'invention ;
La figure 20 est une vue schématique d'une partie du fuselage de l'aéronef représenté sur la figure 15 ;
Les figures 21a et 22 illustrent le raccordement d'équipements électriques à une boîte de dérivation telle que celles représentées sur la figure 18 ou la figure 19 ;
La figure 21b représente un exemple de boîte de dérivation vue selon une vue en coupe prise le long de la ligne IIIa-IIIa de la figure 21a ;
La figure 23 représente un exemple de tronçon de jeu de barres dont une enveloppe structurelle supporte au moins un coffre à bagages d'un aéronef ;
La figure 24 représente un exemple de tronçon de jeu de barres dont une enveloppe structurelle correspond à un rail de sièges d'un aéronef.

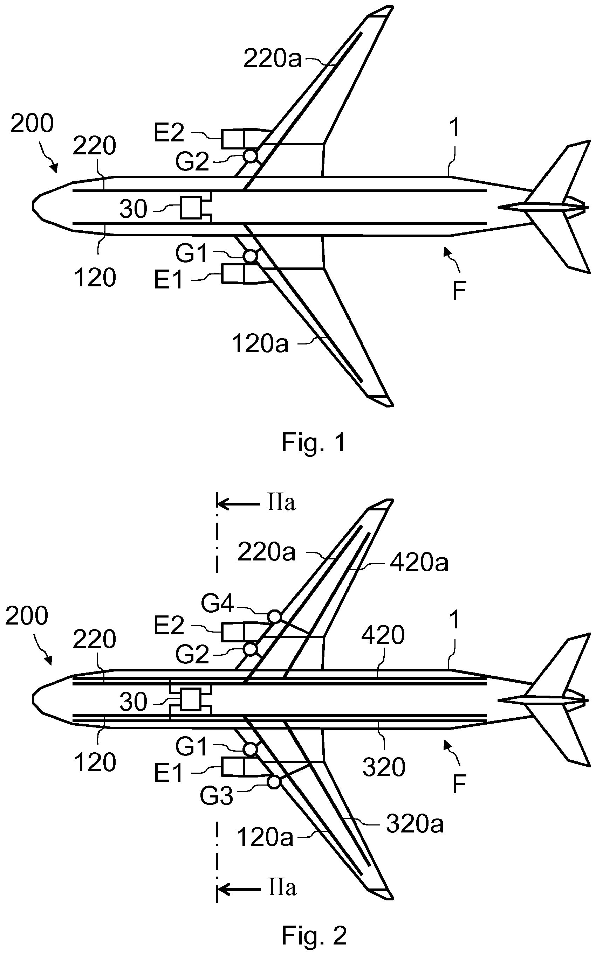

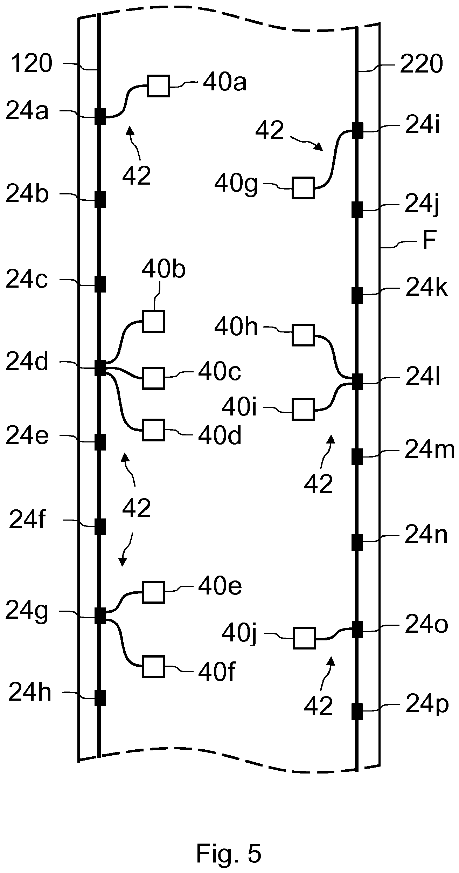

Selon un mode de réalisation conforme au premier aspect de l'invention, l'aéronef 1 représenté sur la figure 1 comporte un fuselage F et un ensemble de générateurs électriques comprenant un premier générateur G1 associé à un moteur E1 de l'aéronef et un deuxième générateur G2 associé à un moteur E2 de l'aéronef. L'aéronef 1 comporte également un réseau de distribution de puissance électrique 200. Le réseau de distribution de puissance électrique comprend un ensemble de jeux de barres, parmi lesquels un premier jeu de barres 120, 120a et un deuxième jeu de barres 220, 220a. Chacun des deux jeux de barres comporte au moins une partie 120, respectivement 220, s'étendant selon une direction longitudinale du fuselage F. Ces deux jeux de barres empruntent des chemins ségrégués dans le fuselage F de l'aéronef, respectivement dans une partie gauche du fuselage (ou bâbord) pour la partie 120 du premier jeu de barres et dans une partie droite du fuselage (ou tribord) pour la partie 220 du deuxième jeu de barres. Cela permet d'éviter une panne commune sur les deux jeux de barres en cas d'incident dans une partie du fuselage. De façon avantageuse, le premier jeu de barres comporte une partie 120a dans une aile gauche de l'aéronef et le deuxième jeu de barres comporte une partie 220a dans une aile droite de l'aéronef. Des conducteurs similaires de la partie 120a et de la partie 120 sont reliés électriquement entre eux. De même, des conducteurs similaires de la partie 220a et de la partie 220 sont reliés électriquement entre eux. Le réseau de distribution de puissance électrique 200 comporte également un système de commutation 30. Ce système de commutation est relié électriquement au premier générateur électrique G1 et au deuxième générateur électrique G2, ainsi qu'au premier jeu de barres 120, 120a et au deuxième jeu de barres 220, 220a. Le système de commutation 30 comporte un mode de fonctionnement dit normal, dans lequel il est configuré pour relier électriquement le premier générateur électrique G1 au premier jeu de barres 120, 120a et le deuxième générateur électrique G2 au deuxième jeu de barres 220, 220a. Dans un mode particulier de réalisation, le premier générateur électrique G1 est relié électriquement au système de commutation 30 via des conducteurs (ou barres) dédiés du premier jeu de barres 120, 120a et le deuxième générateur électrique G2 est relié électriquement au système de commutation via des conducteurs dédiés du deuxième jeu de barres 220, 220a. Par exemple, le premier générateur G1 situé dans l'aile gauche de l'aéronef, à proximité du moteur E1, est relié à des conducteurs dédiés de la partie 120a du premier jeu de barres, par une liaison d'alimentation électrique locale entre ce générateur et cette partie 120a du premier jeu de barres. De la même façon, le deuxième générateur G2 situé dans l'aile droite de l'aéronef, à proximité du moteur E2, est relié à des conducteurs dédiés de la partie 220a du deuxième jeu de barres, par une liaison d'alimentation électrique locale entre ce générateur et cette partie 220a du deuxième jeu de barres. Cela permet d'éviter le cheminement de câblages spécifiques dans les ailes et dans le fuselage de l'aéronef. L'aéronef 1 comporte également un ensemble d'équipements électriques répartis dans le fuselage et chaque jeu de barres de l'ensemble de jeux de barres comporte des points de connexion à différents emplacements répartis selon sa longueur. Pour des raisons de clarté de la figure, ces équipements électriques et ces points de connexion ne sont pas représentés sur la figure 1, mais sur la figure 5 illustrant une partie du fuselage F. Ainsi, l'aéronef 1 comporte un ensemble d'équipements électriques 40a ... 40j dans la partie du fuselage représentée sur la figure 5. Ces équipements électriques nécessitent chacun une alimentation électrique pour fonctionner. Le premier jeu de barres 120 comporte des points de connexion 24a ... 24h à différents emplacements répartis selon sa longueur, dans sa partie représentée sur la figure. Le deuxième jeu de barres 220 comporte des points de connexion 24i ... 24p à différents emplacements répartis selon sa longueur, dans sa partie représentée sur la figure. Chacun des équipements électriques de l'ensemble d'équipements électriques est relié à un point de connexion d'un jeu de barres de l'ensemble de jeux de barres, via une liaison d'alimentation électrique locale 42. Ainsi, par exemple, l'équipement électrique 40a est relié au point de connexion 24a du premier jeu de barres 120. Les équipements électriques 40b, 40c et 40d sont reliés au point de connexion 24d. Les équipements électriques 40e et 40f sont reliés au point de connexion 24g. L'équipement électrique 40g est relié au point de connexion 24i du deuxième jeu de barres 220. Les équipements électriques 40h et 40i sont reliés au point de connexion 24l. L'équipement électrique 40j est relié au point de connexion 24o. De façon avantageuse, les points de connexion 24a, 24d, 24g, 24i, 24l et 24o recevant des liaisons d'alimentation électrique locales 42 d'équipements électriques sont équipés de boîtes de dérivation pourvues de prises ou de connecteurs permettant de brancher facilement ces liaisons d'alimentation électrique locales 42. De façon avantageuse encore, les autres points de connexion ne recevant pas de liaison d'alimentation électrique locale ne sont pas équipés de telles boîtes de dérivation afin de limiter la masse de l'aéronef. Dans un exemple particulier de réalisation, deux points de connexion consécutifs d'un jeu de barres sont espacés d'une distance d'environ 50 à 70cm. Cette distance correspond par exemple à la distance entre deux cadres structurels de l'aéronef. Les boîtes de dérivation peuvent par exemple être installées tous les 4 ou 5 points de connexion dans une majeure partie du fuselage. Toutefois, dans des zones du fuselage correspondant à une densité particulièrement élevée d'équipements électriques, tous les points de connexion, ou parfois un point de connexion sur deux, peuvent être équipés de boîtes de dérivation.

L'ensemble de jeux de barres forme une infrastructure du réseau de distribution de puissance électrique 200 de l'aéronef. Les différents équipements électriques 40a ... 40i sont reliés chacun à un point de connexion d'un jeu de barres par une liaison d'alimentation électrique locale 42. Il est ainsi possible d'ajouter facilement un nouvel équipement électrique dans le fuselage, sans modifier cette infrastructure : il suffit pour cela de mettre en place une liaison d'alimentation électrique locale entre ce nouvel équipement et un point de connexion d'un jeu de barres. De préférence, ce point de connexion est choisi le plus proche possible, sur le jeu de barres considéré, du nouvel équipement électrique. Cet ajout d'un nouvel équipement électrique peut être prévu aussi bien pendant la fabrication de l'aéronef, que lors d'une modification de la configuration de l'aéronef après sa livraison à une compagnie aérienne. Il est également aisé de déplacer un équipement électrique dans le fuselage de l'aéronef, par exemple lors d'une modification de la configuration de l'aéronef : il suffit pour cela de retirer sa liaison d'alimentation électrique locale d'origine, d'amener l'équipement électrique à sa nouvelle position dans le fuselage et de mettre en place une nouvelle liaison d'alimentation électrique locale vers un autre point de connexion d'un jeu de barres. L'utilisation d'un ensemble de jeu de barres plutôt que de harnais de câbles permet également de réduire la masse du réseau de distribution de puissance électrique de l'aéronef. En effet, les conducteurs électriques d'un jeu de barres utilisés de façon commune par plusieurs équipements électriques nécessitent un dimensionnement moindre que la somme des dimensionnements de câbles distincts, dans des harnais, alimentant ces mêmes équipements électriques.

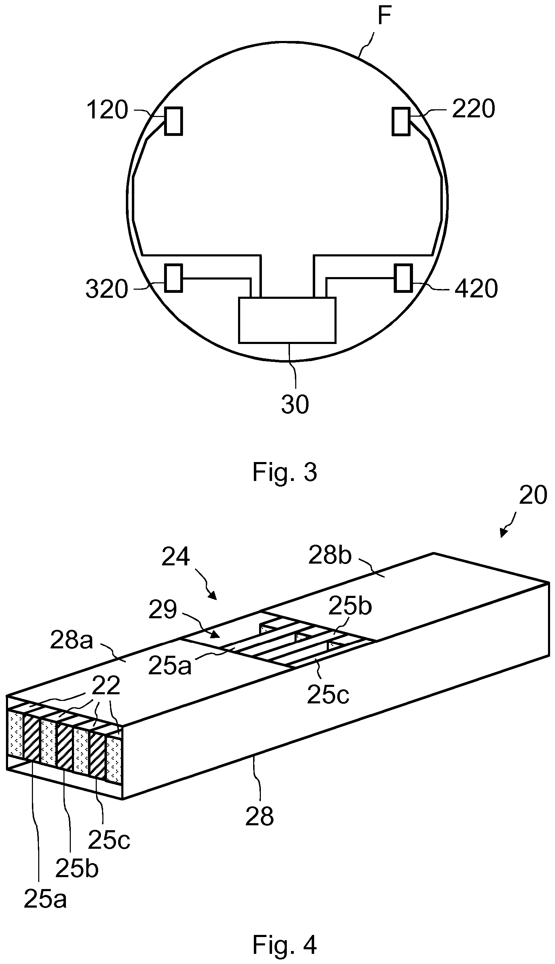

Dans un autre mode de réalisation représenté sur la figure 2, l'aéronef 1 comprend en outre un troisième générateur G3 à proximité du moteur E1 et un quatrième générateur G4 à proximité du moteur E2. L'ensemble de jeux de barres comporte en outre un troisième jeu de barres 320, 320a et un quatrième jeu de barres 420, 420a. Le troisième jeu de barres et le quatrième jeu de barres comportent chacun une partie 320, respectivement 420, s'étendant selon une direction longitudinale du fuselage F. Les quatre jeux de barres empruntent des chemins ségrégués dans le fuselage, comme représenté sur la figure 3. Comme indiqué précédemment, la partie 120 du premier jeu de barres chemine dans une partie gauche du fuselage et la partie 220 du deuxième jeu de barres chemine dans une partie droite du fuselage. De même, la partie 320 du troisième jeu de barres chemine dans une partie gauche du fuselage et la partie 420 du quatrième jeu de barres chemine dans une partie droite du fuselage. La partie 120 du premier jeu de barres et la partie 220 du deuxième jeu de barres cheminent dans une partie supérieure du fuselage, alors que la partie 320 du troisième jeu de barres et la partie 420 du quatrième jeu de barres cheminent dans une partie inférieure du fuselage. De façon avantageuse, le troisième jeu de barres comporte une partie 320a dans l'aile gauche de l'aéronef et le quatrième jeu de barres comporte une partie 420a dans l'aile droite de l'aéronef. Comme le premier jeu de barres 120, 120a et le deuxième jeu de barres 220, 220a, le troisième jeu de barres 320, 320a et le quatrième jeu de barres 420, 420a sont également reliés au système de commutation 30. Dans le mode de fonctionnement normal, le système de commutation 30 est configuré pour relier électriquement le troisième générateur électrique G3 au troisième jeu de barres et le quatrième générateur électrique G4 au quatrième jeu de barres. Dans un mode particulier de réalisation, le troisième générateur électrique G3 est relié électriquement au système de commutation 30 via des conducteurs (ou barres) dédiés du troisième jeu de barres 320, 320a et le quatrième générateur électrique G4 est relié électriquement au système de commutation via des conducteurs dédiés du quatrième jeu de barres 420, 420a. Par exemple, le troisième générateur G3 situé dans l'aile gauche de l'aéronef, à proximité du moteur E1, est relié à des conducteurs dédiés de la partie 320a du troisième jeu de barres, par une liaison d'alimentation électrique locale entre ce générateur et cette partie 320a du troisième jeu de barres. De la même façon, le quatrième générateur G4 situé dans l'aile droite de l'aéronef, à proximité du moteur E2, est relié à des conducteurs dédiés de la partie 420a du quatrième jeu de barres, par une liaison d'alimentation électrique locale entre ce générateur et cette partie 420a du quatrième jeu de barres.

Dans un exemple de réalisation représenté sur la figure 4, un jeu de barres 20 de l'ensemble de jeux de barres comprend un ensemble de conducteurs électriques correspondant à des barres 25a, 25b, 25c. Bien que trois barres 25a, 25b et 25c soient représentées sur la figure, ce nombre de barres ne doit pas être interprété de façon limitative de l'invention. L'homme du métier saura adapter le nombre de barres en fonction des différentes tensions électriques à distribuer aux équipements électriques de l'aéronef au moyen du réseau de distribution de puissance électrique 200 et en fonction du nombre de ségrégations distinctes requises. Ces barres cheminent de façon parallèle ou sensiblement parallèle selon une longueur du jeu de barres 20. Elles sont séparées les unes des autres par un matériau électriquement isolant 22, par exemple une matière plastique ou de l'air. L'ensemble des barres est entouré par une enveloppe 28. Selon un mode de réalisation, cette enveloppe est formée d'un matériau électriquement isolant. Selon un autre mode de réalisation, l'enveloppe 28 est formée d'un matériau électriquement conducteur. Un matériau électriquement isolant 22 est alors disposé entre les barres 25a, 25b et 25c d'une part et l'enveloppe 28 d'autre part. Cet autre mode de réalisation est avantageux, car il permet d'utiliser l'enveloppe 28 en tant que conducteur électrique de retour de courant (par exemple conducteur de neutre en courant alternatif, 0 volts en tension continue, etc.) et/ou en tant que blindage électromagnétique permettant d'éviter des perturbations électromagnétiques d'équipements électriques de l'aéronef par des courants électriques circulant dans les barres 25a, 25b, 25c. La partie de jeu de barres 20 représentée sur la figure comporte un point de connexion 24. Ce point de connexion comporte une ouverture 29 de l'enveloppe 28, par exemple sur une face supérieure (sur la figure) de ladite enveloppe. L'ouverture 29 délimite ainsi deux parties 28a et 28b de la face supérieure de l'enveloppe 28. La partie de l'ensemble de barres 25a, 25b, 25c située en regard de l'ouverture 29 est dépourvue d'isolant 28 lorsque cet isolant correspond à une matière plastique, de façon à permettre le raccordement d'un moyen de connexion sur les barres 25a, 25b, 25c à travers l'ouverture 29. Un tel moyen de connexion correspond par exemple à un connecteur comprenant des ensembles de lames formant ressort, susceptibles d'être mis en place sur les barres.

De façon avantageuse, le système de commutation 30 comporte un mode de fonctionnement dit reconfiguré, susceptible d'être activé en cas de survenance d'une panne dans le réseau de distribution de puissance électrique. Dans le mode de fonctionnement reconfiguré, selon une première variante, le système de commutation 30 est configuré pour établir des liaisons électriques entre d'une part les générateurs électriques G1, G2 (et éventuellement G3, G4 selon le mode de réalisation) de l'ensemble de générateurs électriques et d'autre part les jeux de barres de l'ensemble de jeux de barres, ces liaisons électriques étant modifiées par rapport à des liaisons électriques établies dans le mode de fonctionnement normal. Selon une deuxième variante, le système de commutation 30 est configuré pour établir des liaisons électriques entre des jeux de barres de l'ensemble de jeux de barres. Cette deuxième variante peut être combinée avec la première variante. Par exemple, en cas de panne du générateur G3 (qui alimente le troisième jeu de barres 320, 320a dans le mode de fonctionnement normal) le système de commutation modifie les liaisons électriques de façon à alimenter le premier jeu de barres 120, 120a, ainsi que le troisième jeu de barres 320, 320a, à partir du générateur G1.

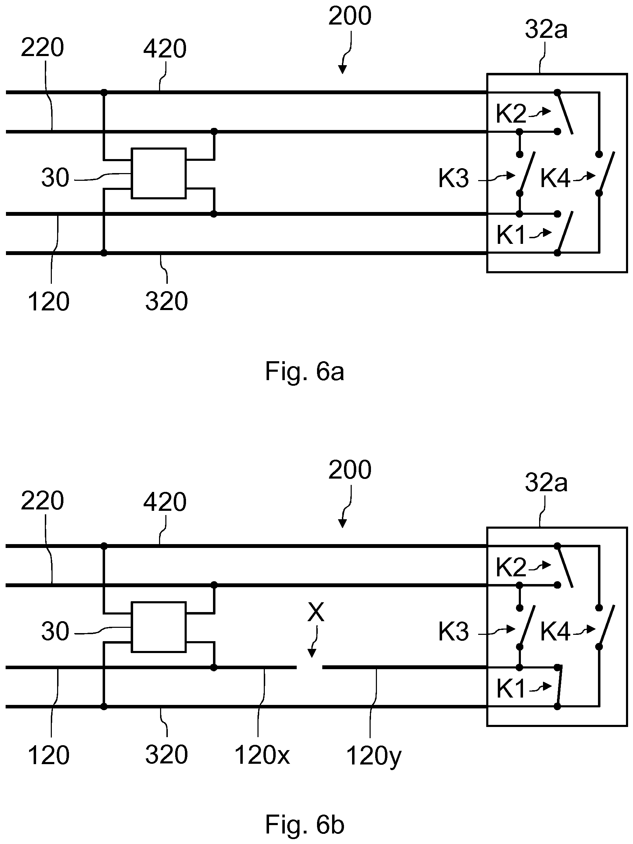

Dans un mode particulier de réalisation, le système de commutation comprend un dispositif de commutation principal et au moins un dispositif de commutation secondaire déporté du dispositif de commutation principal. Le dispositif de commutation principal est similaire au système de commutation 30 représenté sur les figures 1, 2 et 3 et décrit précédemment. Il assure par exemple une fonction de coeur électrique de l'aéronef. L'au moins un dispositif de commutation secondaire est commandé par le système de commutation 30 auquel il est relié par une liaison de communication spécifique ou par un réseau de communication de l'aéronef. Dans l'exemple représenté sur les figures 6a et 6b, un dispositif de commutation secondaire 32a est déporté à une extrémité des jeux de barres de l'ensemble de jeu de barres, par exemple dans une partie arrière ou dans une partie avant du fuselage F de l'aéronef. Le dispositif de commutation secondaire 32a comporte quatre commutateurs K1, K2, K3, K4, correspondant par exemple à des contacteurs pouvant être commandés par le système de commutation 30. Par exemple, ces contacteurs comprennent au moins autant de contacts que les jeux de barres comprennent de conducteurs électriques 25a, 25b, 25c, etc. Dans le mode de fonctionnement normal du système de commutation, comme représenté sur la figure 6a, les contacts des commutateurs K1, K2, K3 et K4 sont ouverts, de telle façon qu'ils n'établissent aucune liaison entre les jeux de barres 120, 220, 320 et 420. La figure 6b illustre une situation dans laquelle une défaillance X est survenue sur le premier jeu de barres 120. Cette défaillance a pour effet d'isoler électriquement entre elles deux parties 120x et 120y du premier jeu de barres 120. Il en résulte qu'en mode de fonctionnement normal, la partie 120y du premier jeu de barres n'est plus alimentée par le premier générateur G1 via le système de commutation 30. Pour apporter une solution à ce problème, dans le mode de fonctionnement reconfiguré, le système de commutation commande le dispositif de commutation déportée 32a, de façon à fermer les contacts du commutateur K1. Cela a pour effet de relier entre eux les conducteurs similaires d'une part de la partie 120y du premier jeu de barres et d'autre part du troisième jeu de barres 320. Cette partie 120y du premier jeu de barres est alors alimentée par le troisième générateur G3 via le système de commutation 30.

Dans un mode avantageux de réalisation, au moins un des jeux de barres de l'ensemble de jeux de barres comprend au moins deux tronçons disposés bout à bout et reliés électriquement entre eux. Cela est particulièrement intéressant lorsque l'aéronef 1 est formé par assemblage de tronçons du fuselage F. Ces tronçons de fuselage sont alors pré-équipés de tronçons de jeux de barres qui sont reliés entre eux pendant ou après l'assemblage des tronçons de fuselage. Par exemple, chacune des parties 120, 220, 320 et 420 des premier, deuxième, troisième et quatrième jeux de barres est composée d'un assemblage de tronçons de jeux de barres disposés bout à bout et reliés électriquement entre eux. Selon une première alternative, les tronçons de jeux de barres sont spécifiques aux tronçons de fuselage dans lesquels ils sont intégrés. Selon une deuxième alternative, chaque tronçon de jeux de barres intégré dans un tronçon de fuselage est constitué d'un assemblage de tronçons modulaires de jeux de barres disposés bout à bout et reliés électriquement entre eux. De façon avantageuse, ces tronçons modulaires de jeux de barres correspondent à un nombre restreint de longueurs judicieusement choisies de façon à permettre le pré-équipement des différents tronçons de fuselage par combinaison de tronçons modulaires correspondant à ces longueurs prédéfinies.

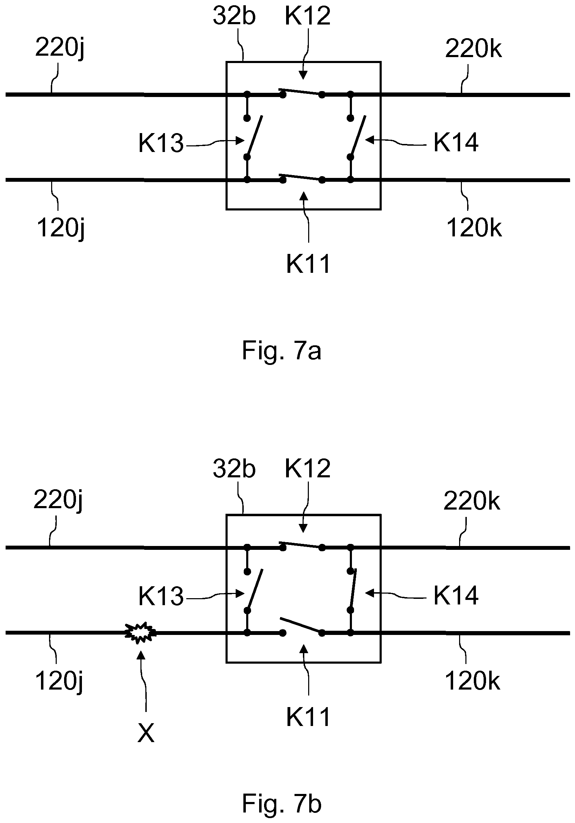

De façon particulière, un dispositif de commutation secondaire 32b est relié électriquement à deux tronçons (ou à deux tronçons modulaires) consécutifs d'un jeu de barres. Dans un exemple représenté sur les figures 7a et 7b, un dispositif de commutation secondaire 32b est mis en place entre d'une part deux tronçons de jeux de barres 120j et 220j et d'autre part deux tronçons de jeux de barres 120k et 220k. Les tronçons 120j et 120k correspondent à deux tronçons consécutifs du premier jeu de barres 120. Les tronçons 220j et 220k correspondent à deux tronçons consécutifs du deuxième jeu de barres 220. Le dispositif de commutation secondaire 32b comporte quatre commutateurs K11, K12, K13, K14, correspondant par exemple à des contacteurs pouvant être commandés par le système de commutation 30. Par exemple, ces contacteurs comprennent au moins autant de contacts que les jeux de barres comprennent de conducteurs électriques 25a, 25b, 25c, etc. Dans le mode de fonctionnement normal du système de commutation, comme représenté sur la figure 7a, les contacts des commutateurs K11 et K12 sont fermés de façon à établir des liaisons électriques entre des conducteurs électriques similaires des tronçons 120j et 120k du premier jeu de barres d'une part et 220j et 220k du deuxième jeu de barres d'autre part. Les contacts des commutateurs K13 et K14 sont ouverts, de telle façon qu'ils n'établissent aucune liaison entre le premier jeu de barres et le deuxième jeu de barres. La figure 7b illustre une situation dans laquelle une défaillance X est survenue sur le tronçon 120j premier jeu de barres 120. Le système de commutation 30, bien que non représenté sur la figure, est considéré être à gauche des tronçons 120j et 220j sur la figure. La défaillance X a pour effet d'interrompre l'alimentation électrique du jeu de barres 120k par le générateur G1via le système de commutation 30 et le jeu de barres 120j. Pour résoudre ce problème, dans un mode de fonctionnement reconfiguré, le système de commutation 30 commande l'ouverture des contacts du commutateur K11 et la fermeture des contacts du commutateur K14. Cela a pour effet de relier entre eux les contacts similaires du tronçon 220j du deuxième jeu de barres et du tronçon 120k du premier jeu de barres. Ce tronçon 120k du premier jeu de barres est alors alimenté par le deuxième générateur G2 via le système de commutation 30 et le jeu de barres 220j.

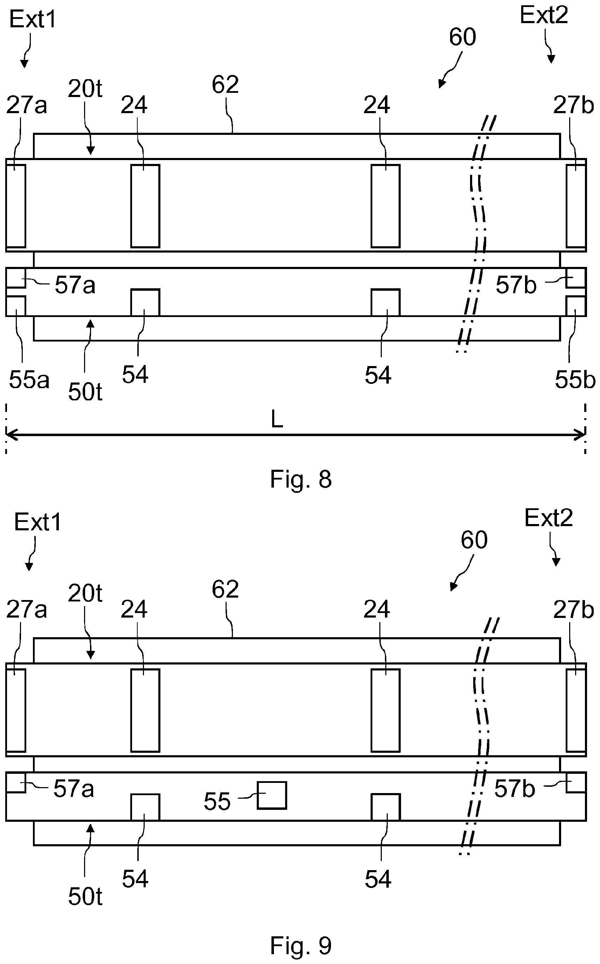

Selon un mode de réalisation conforme au deuxième aspect de l'invention, comme représenté sur la figure 8, l'élément modulaire 60 pour un réseau mixte de distribution de puissance électrique et de communication de données d'un aéronef comporte :
- un tronçon d'un jeu de barres de distribution de puissance électrique 20t, s'étendant selon une longueur L de l'élément modulaire 60 ; et
- un ensemble de liaisons de données 50t, cet ensemble de liaisons de données s'étendant selon ladite longueur L de l'élément modulaire, de façon sensiblement parallèle au tronçon de jeu de barres 20t.

De façon préférée, le tronçon de jeu de barres 20t et l'ensemble de liaisons de données 50t sont montés solidaires l'un de l'autre. Pour cela, dans l'exemple représenté sur la figure 8, le tronçon de jeu de barres 20t et l'ensemble de liaisons de données 50t sont fixés sur un support commun 62. Dans un autre exemple de réalisation, non représenté, les liaisons de données de l'ensemble de liaisons de données 50t sont attachées au tronçon de jeu de barres 20t. Dans un mode particulier de réalisation dans lequel ces liaisons de données correspondent à des nappes de fibres optiques, ces nappes de fibres optiques sont par exemple collées sur une face du tronçon de jeu de barres 20t.

Selon une première alternative, les liaisons de données de l'ensemble de liaisons de données 50t correspondent à des paires torsadées de fils de cuivre ou d'aluminium. Selon une autre alternative, les liaisons de données correspondent à des fibres optiques. Outre un gain de masse notable, ces fibres optiques présentent l'avantage d'être insensibles à d'éventuelles perturbations électromagnétiques qui pourraient être produites lorsqu'un courant électrique circule dans des barres du tronçon de jeu de barres 20t.

Le tronçon de jeu de barres 20t comporte des points de connexion 24 à différents emplacements répartis selon sa longueur. L'ensemble de liaisons de données 50t comporte des points de connexion 54 à différents emplacements répartis selon sa longueur et disposés chacun à proximité (ou en regard) d'un point de connexion 24 du tronçon de jeu de barres 20t. L'élément modulaire 60 comporte ainsi des couples de points de connexion, comprenant chacun d'une part un point de connexion 24 du tronçon de jeu de barres 20t et d'autre part le point de connexion 54 de l'ensemble de liaisons de données 50t, situé à proximité dudit point de connexion 24. Le tronçon de jeu de barres 20t comporte un premier point d'interconnexion 27a et l'ensemble de liaisons de données 50t comporte un premier point d'interconnexion 57a. Ces premiers points d'interconnexion 27a et 57a sont situés à une première extrémité longitudinale Ext1 de l'élément modulaire 60. Ces premiers points d'interconnexion 27a et 57a sont prévus pour relier le tronçon de jeu de barres 20t et l'ensemble de liaisons de données 50t respectivement à un tronçon de jeu de barres et à un ensemble de liaisons de données d'un premier autre élément modulaire disposé longitudinalement en série avec l'élément modulaire 60. Le tronçon de jeu de barres 20t comporte un deuxième point d'interconnexion 27b et l'ensemble de liaisons de données 50t comporte un deuxième point d'interconnexion 57b. Ces deuxièmes points d'interconnexion 27b et 57b sont situés à une deuxième extrémité longitudinale Ext2 de l'élément modulaire 60. Ces deuxièmes points d'interconnexion 27b et 57b sont prévus pour relier le tronçon de jeu de barres 20t et l'ensemble de liaisons de données 50t respectivement à un tronçon de jeu de barres et à un ensemble de liaisons de données d'un deuxième autre élément modulaire disposé longitudinalement en série avec l'élément modulaire 60.

L'ensemble de liaisons de données 50t comporte également au moins un point de connexion, dit point de brassage, prévu pour recevoir une baie de brassage. Selon une première variante, cet au moins un point de brassage est situé à une extrémité longitudinale de l'élément modulaire 60. Dans l'exemple représenté sur la figure 8, l'ensemble de liaisons de données 50t comporte deux points de brassage 55a et 55b situés respectivement à la première extrémité longitudinale Ext1 et à la deuxième extrémité longitudinale Ext2 de l'élément modulaire 60. Selon une deuxième variante illustrée par la figure 9, l'au moins un point de brassage 55 est situé entre deux points de connexion 54 de l'ensemble de liaisons de données 50t. Ces deux variantes peuvent être combinées entre elles : l'élément modulaire 60 comporte alors un ou deux points de brassage 55a, 55b à au moins l'une de ses extrémités longitudinales Ext, Ext2, ainsi qu'au moins un point de brassage situé entre deux points de connexion 54.

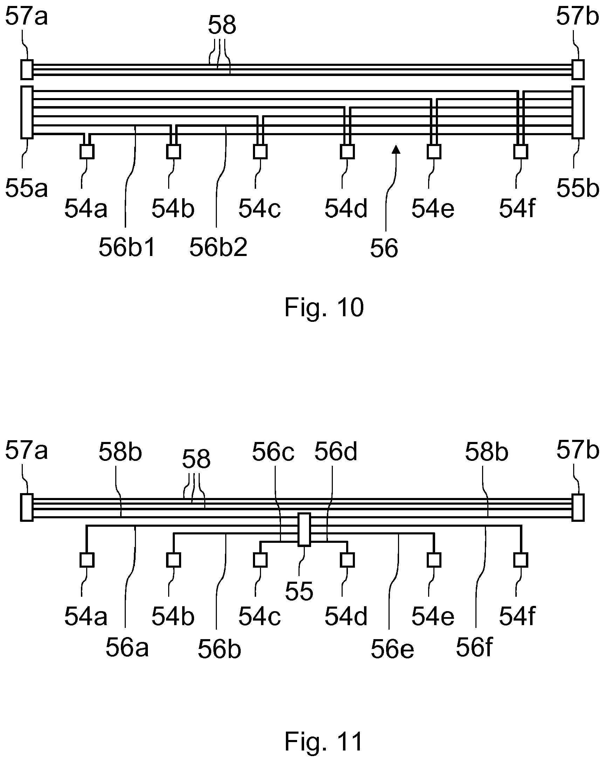

L'ensemble de liaisons de données 50t comporte également au moins une liaison de données entre d'une part chacun des points de connexion répartis selon sa longueur et d'autre part le point de brassage. Ces liaisons de données 56 ne sont pas représentées sur les figures 8 et 9 pour des raisons de clarté desdites figures. Comme représenté sur la figure 10 illustrant de façon schématique les liaisons de données correspondant à la figure 8, au moins une liaison de données est prévue entre d'une part chaque point de brassage 55a, 55b et d'autre part chaque point de connexion 54a, 54b ... 54f. Par exemple, l'ensemble de liaisons de données 50t comporte au moins une liaison de données 56b1 entre le point de brassage 55a et le point de connexion 54b et au moins une liaison de données 56b2 entre le point de brassage 55b et le point de connexion 54b. Plusieurs liaisons de données 56 peuvent être prévues entre chaque point de brassage 55a, 55b et les différents points de connexion 54a ... 54f, bien qu'une seule liaison soit représentée sur la figure 10. En particulier, lorsque les liaisons de données sont mises en oeuvre au moyen de fibres optiques, chaque liaison représentée sur la figure peut en fait correspondre à un ensemble de fibres optiques, par exemple 8 fibres optiques.

De façon avantageuse, l'ensemble de liaisons de données 50t comporte également des liaisons de données 58 entre le premier point d'interconnexion 57a et le deuxième point d'interconnexion 57b. Ces liaisons de données 58 sont notamment utiles pour permettre d'établir des communications traversant plusieurs éléments modulaires 60.

Dans l'exemple représenté sur la figure 11 illustrant de façon schématique les liaisons de données correspondant à la figure 9, au moins une liaison de données 56a, 56b, ... 56f est prévue entre le point de brassage 55 et chaque point de connexion 54a, 54b ... 54f. De plus, au moins une liaison de données 58b est prévue entre le point de brassage 55 et chaque point d'interconnexion 57a, 57b.

Le (les) points de brassage est (sont) prévu(s) pour recevoir une baie de brassage. L'élément modulaire 60 comporte par exemple au moins une fixation prévue pour permettre la fixation de la baie de brassage sur l'élément modulaire. Cette fixation peut notamment correspondre à un écrou ou à une vis, à une pièce mécanique prévue pour coopérer avec une pièce de la baie de brassage de façon à clipper celle-ci sur l'élément modulaire, etc. De façon avantageuse, dans les points de brassage 55, 55a, 55b, les liaisons de données 56 arrivent sur un ou plusieurs connecteurs de brassage pouvant être intégrés dans la baie de brassage correspondante.

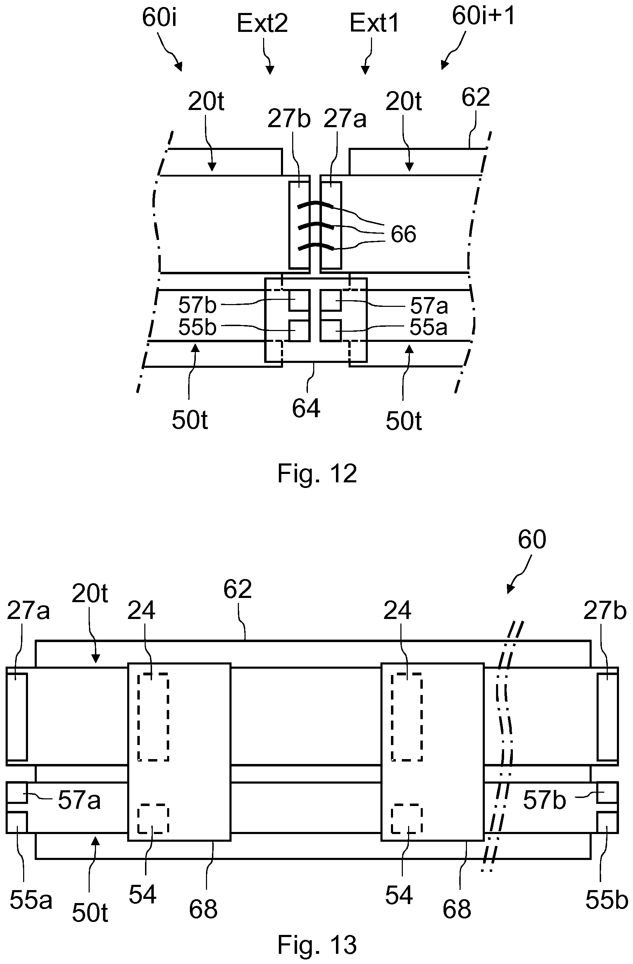

Un exemple d'interconnexion de deux éléments modulaires consécutifs est illustré par la figure 12, dans le cas d'éléments modulaires 60i, 60i+1 semblables à l'élément modulaire 60 représenté sur la figure 8. La première extrémité Ext1 de l'élément modulaire 60i+1 est raccordée à la deuxième extrémité Ext2 de l'élément modulaire 60i. Pour cela, ces deux extrémités sont disposées bout à bout, à proximité l'une de l'autre, de telle façon que le premier point d'interconnexion 27a du jeu de barres 20t de l'élément modulaire 60i+1 fait face au deuxième point d'interconnexion 27b du jeu de barres 20t de l'élément modulaire 60i et le premier point d'interconnexion 57a de l'ensemble de liaisons de données 50t de l'élément modulaire 60i+1 fait face au deuxième point d'interconnexion 57b de l'ensemble de liaisons de données 50t de l'élément modulaire 60i. Les conducteurs similaires des points d'interconnexion 27a et 27b sont reliés électriquement entre eux au moyen de liaisons électriques 66. Dans un premier exemple de réalisation, les points d'interconnexion 27a et 27b correspondent à des borniers et les liaisons électriques 66 correspondent alors à des câbles de section appropriée. Dans un deuxième exemple de réalisation, les points d'interconnexion 27a et 27b correspondent à des connecteurs. Les liaisons électriques 66 correspondent alors par exemple à un raccordement desdits connecteurs. De façon particulière, lorsqu'ils sont raccordés, ces connecteurs peuvent coulisser longitudinalement l'un par rapport à l'autre de façon à absorber des déplacements longitudinaux des deux éléments modulaires l'un par rapport à l'autres, en particulier lors de déformations structurelles de l'aéronef dans lequel sont installés les éléments modulaires. Une baie de brassage 64 est installée de façon à recevoir les points d'interconnexion 57a de l'élément modulaire 60i+1 et 57b de l'élément modulaire 60i, ainsi que les points de brassage 55a de l'élément modulaire 60i+1 et 55b de l'élément modulaire 60i. De façon avantageuse, ces points d'interconnexion et de brassage sont équipés de connecteurs qui sont alors intégrés dans la baie de brassage. La baie de brassage permet de mettre en place les interconnexions requises, par exemple au moyen de jarretières. Elle permet également l'intégration d'éléments actifs par exemple de type commutateur ou de type routeur, lorsque de tels équipements sont nécessaires pour réaliser les interconnexions. Ces éléments actifs correspondent par exemple à des commutateurs ou à des routeurs de type Ethernet ou de type USB. Les jarretières correspondent à des jarretières filaires lorsque les liaisons de données sont de type filaire (par exemple des paires torsadées de fils de cuivre ou d'aluminium) ou à des jarretières optiques lorsque les liaisons de données correspondent à des fibres optiques. La baie de brassage recevant les points d'interconnexion 57a, 57b et les points de brassage 55a, 55b, permet la mise en place de jarretières pour réaliser différents types d'interconnexions. Un premier type d'interconnexion correspond à une interconnexion d'une première liaison entre l'un des points de brassage 55a, 55b et un point de connexion 24 de l'ensemble de liaison de données d'un des éléments modulaires 60i, 60i+1, avec une deuxième liaison entre l'un des points de brassage 55a, 55b et un point de connexion 24 de l'ensemble de liaison de données d'un des éléments modulaires 60i, 60i+1. Un deuxième type d'interconnexion correspond à une interconnexion d'une première liaison entre l'un des points de brassage 55a, 55b et un point de connexion 24 de l'ensemble de liaison de données d'un des éléments modulaires 60i, 60i+1, avec une deuxième liaison arrivant sur l'un des points d'interconnexion 57a, 57b. Un troisième type d'interconnexion correspond à une interconnexion d'une première liaison arrivant sur l'un des points d'interconnexion 57a, 57b, avec une deuxième liaison arrivant sur l'autre des points d'interconnexion 57a, 57b. Plusieurs modes d'installation de la baie de brassage 64 sont possibles sans sortir du cadre de l'invention. Selon un premier exemple, la baie de brassage est fixée sur au moins l'un des éléments modulaires 60i, 60i+1 de façon à recouvrir les points de brassage 55a, 55b et les points d'interconnexion 57a, 57b, lesquels entrent dans la baie de brassage par une ou plusieurs découpes de celle-ci. Selon un deuxième exemple, la baie de brassage est fixée soit sur au moins l'un des éléments modulaires 60i, 60i+1, à proximité de son extrémité Ext2, Ext1, soit sur la structure de l'aéronef à proximité des extrémités Ext2, Ext1 des éléments modulaires 60i, 60i+1, sans que la baie de brassage recouvre ces points d'interconnexion et de brassage. Les points d'interconnexion 57a, 57b et les points de brassage 55a, 55b sont alors disposés à des extrémités de liaisons de données des ensembles de liaisons de données 50t suffisamment longues et suffisamment souples pour permettre l'intégration desdits points d'interconnexion et de brassage dans la baie de brassage 64.

Dans un mode particulier de réalisation représenté sur la figure 13, chacun des différents couples de points de connexion 24, 54 de l'élément modulaire 60 est prévu pour recevoir une boîte de dérivation mixte de distribution de puissance électrique et de communication de données 68. Une telle boîte de dérivation mixte permet le raccordement d'une ou de plusieurs liaisons locales de distribution d'alimentation électrique et/ou de distribution de données vers un ou plusieurs équipements électriques de l'aéronef. L'utilisation de boîtes de dérivation mixtes facilite le raccordement des équipements électriques aux éléments modulaires 60 : ainsi, il n'est pas nécessaire de raccorder chaque équipement électrique au tronçon de jeu de barres 20t et à une liaison de données de l'ensemble de liaisons de données 50t. La boîte de dérivation 68 est par exemple pourvue de connecteurs facilitant le raccordement de liaisons locales vers les équipements électriques. De façon avantageuse, un couple de points de connexion n'est équipé d'une boîte de dérivation que si un équipement électrique est raccordé à ce couple de points de connexion. Cela permet d'éviter un accroissement inutile de la masse de l'aéronef.

Dans un autre mode particulier de réalisation, le tronçon de jeu de barres 20t comporte au moins une partie flexible prévue pour permettre des déformations de l'élément modulaire 60 en réponse à des déformations du fuselage F d'un aéronef lorsque l'élément modulaire est installé dans ledit fuselage d'un aéronef. Par exemple, pour réaliser une telle partie flexible, chaque élément électriquement conducteur du tronçon de jeu de barres 20t comprend un ressort sur une partie de sa longueur.

Dans un exemple particulier de réalisation, la longueur L d'un élément modulaire 60 est comprise entre 3 et 10 mètres, de préférence entre 6 et 10 mètres. De façon particulière, deux couples consécutifs de points de connexion de l'élément modulaire sont espacés d'une distance d'environ 50 à 70cm. Cette distance correspond par exemple à la distance entre deux cadres structurels de l'aéronef. Les boîtes de dérivation 68 peuvent par exemple être installées tous les 4 ou 5 couples de points de connexion dans une majeure partie du fuselage. Toutefois, dans des zones du fuselage correspondant à une densité particulièrement élevée d'équipements électriques, tous les couples de points de connexion, ou parfois un couple de points de connexion sur deux, peuvent être équipés de boîtes de dérivation.

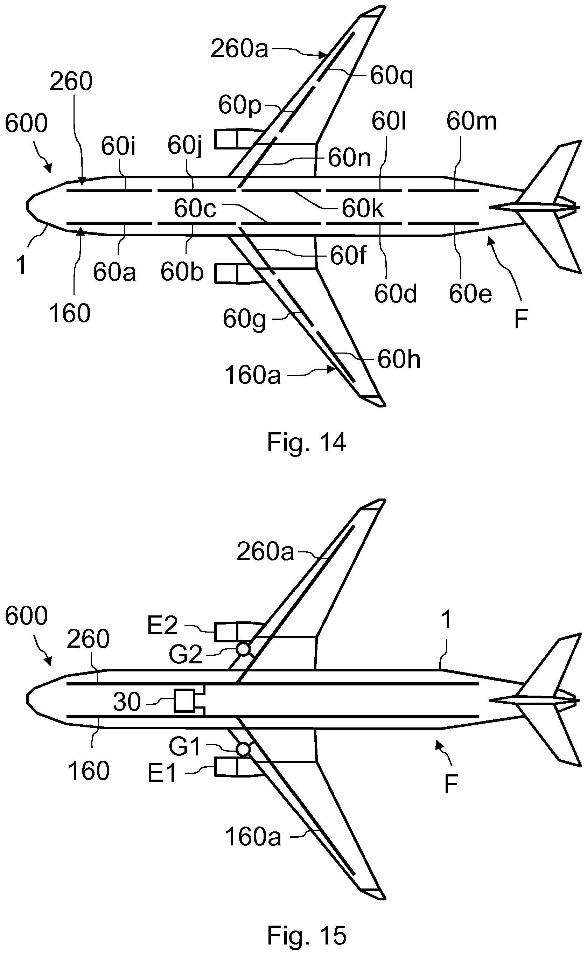

L'invention est également relative à un aéronef 1 comportant un fuselage F et un ensemble d'équipements électriques répartis dans le fuselage. Comme représenté sur la figure 14, l'aéronef comporte un réseau mixte de distribution de puissance électrique et de communication de données 600 comprenant un ensemble d'éléments modulaires 60a ... 60q similaires à l'élément modulaire 60 précité. Le réseau mixte 600 comprend un premier sous-réseau mixte de distribution de puissance électrique et de communication de données 160, 160a. Ce premier sous-réseau mixte est formé par assemblage entre eux d'éléments modulaires 60a ... 60h formant un premier sous-ensemble de l'ensemble d'éléments modulaires. Le premier sous réseau mixte comprend une partie 160 qui s'étend longitudinalement dans le fuselage F de l'aéronef. De façon avantageuse, il comprend aussi une partie 160a qui s'étend dans l'aile gauche de l'aéronef. Le réseau mixte 600 comprend également un deuxième sous-réseau mixte de distribution de puissance électrique et de communication de données 260, 260a. Ce deuxième sous-réseau mixte est formé par assemblage entre eux d'éléments modulaires 60i ... 60q formant un deuxième sous-ensemble de l'ensemble d'éléments modulaires. Le deuxième sous réseau mixte comprend une partie 260 qui s'étend longitudinalement dans le fuselage F de l'aéronef. De façon avantageuse, il comprend aussi une partie 260a qui s'étend dans l'aile droite de l'aéronef. Le premier sous-réseau 160, 160a et le deuxième sous-réseau 260, 260a empruntent des chemins ségrégués dans le fuselage F, par exemple dans une partie gauche du fuselage pour le premier sous réseau et dans une partie droite du fuselage pour le deuxième sous réseau, comme représenté sur la figure 14. Deux éléments modulaires consécutifs sont par exemple assemblés entre eux comme décrit en référence à la figure 12. Chaque équipement électrique de l'ensemble d'équipements électriques est relié à un point de connexion 24 du tronçon de jeu de barres 20t d'un élément modulaire 60a ... 60q via une liaison d'alimentation électrique locale et/ou à un point de connexion 54 de l'ensemble de liaisons de données 50t dudit élément modulaire par une liaison de données locale. Pour des raisons de clarté de la figure 14, les équipements électriques et les liaisons locales ne sont pas représentés. L'utilisation d'éléments modulaires conformes à l'invention pour construire le réseau mixte 600 permet d'adapter facilement ce réseau à n'importe quel type d'aéronef, sans nécessiter de jeux de barres ou d'ensembles de liaisons de données spécifiques à l'aéronef considéré, en particulier en ce qui concerne leur longueur. L'utilisation d'un ou de quelques types d'éléments modulaires de longueurs prédéterminées permet d'adapter un tel réseau à tout type d'aéronef.

Selon un mode de réalisation conforme au troisième aspect de l'invention, l'aéronef 1 représenté sur la figure 15 comporte un fuselage F et un ensemble de générateurs électriques comprenant un premier générateur G1 associé à un moteur E1 de l'aéronef et un deuxième générateur G2 associé à un moteur E2 de l'aéronef. L'aéronef 1 comporte également un réseau mixte de distribution de puissance électrique et de communication de données 600. Le réseau mixte 600 comprend un ensemble de jeux de barres, parmi lesquels un premier jeu de barres et un deuxième jeu de barres. Un ensemble de liaisons de données est associé à chaque jeu de barres de l'ensemble de jeux de barres. Chaque ensemble de liaisons de données s'étend de façon sensiblement parallèle au jeu de barres auquel il est associé. Le premier jeu de barres et l'ensemble de liaisons de données associé à ce premier jeu de barres forment un premier sous-réseau mixte de distribution de puissance électrique et de communication de données 160, 160a. Le deuxième jeu de barres et l'ensemble de liaisons de données associé à ce deuxième jeu de barres forment un deuxième sous-réseau mixte de distribution de puissance électrique et de communication de données 260, 260a. Chacun des deux sous-réseaux comporte au moins une partie 160, respectivement 260, s'étendant selon une direction longitudinale du fuselage F. Ces deux sous-réseaux empruntent des chemins ségrégués dans le fuselage F de l'aéronef, respectivement dans une partie gauche du fuselage (ou bâbord) pour la partie 160 du premier sous-réseau et dans une partie droite du fuselage (ou tribord) pour la partie 260 du deuxième sous-réseau. Cela permet d'éviter une panne commune sur les deux sous-réseaux en cas d'incident dans une partie du fuselage. De façon avantageuse, le premier sous-réseau comporte une partie 160a dans une aile gauche de l'aéronef et le deuxième sous-réseau comporte une partie 260a dans une aile droite de l'aéronef. De façon avantageuse, le réseau de distribution de puissance électrique comporte également un système de commutation 30. Ce système de commutation est relié électriquement au premier générateur électrique G1 et au deuxième générateur électrique G2, ainsi qu'au premier jeu de barres du premier sous-réseau 160, 160a et au deuxième jeu de barres du deuxième sous-réseau 260, 260a. Le système de commutation 30 comporte un mode de fonctionnement dit normal, dans lequel il est configuré pour relier électriquement le premier générateur électrique G1 au premier jeu de barres et le deuxième générateur électrique G2 au deuxième jeu de barres. L'aéronef 1 comporte également un ensemble d'équipements électriques répartis dans le fuselage. Pour des raisons de clarté de la figure, ces équipements électriques ne sont pas représentés sur la figure 15.

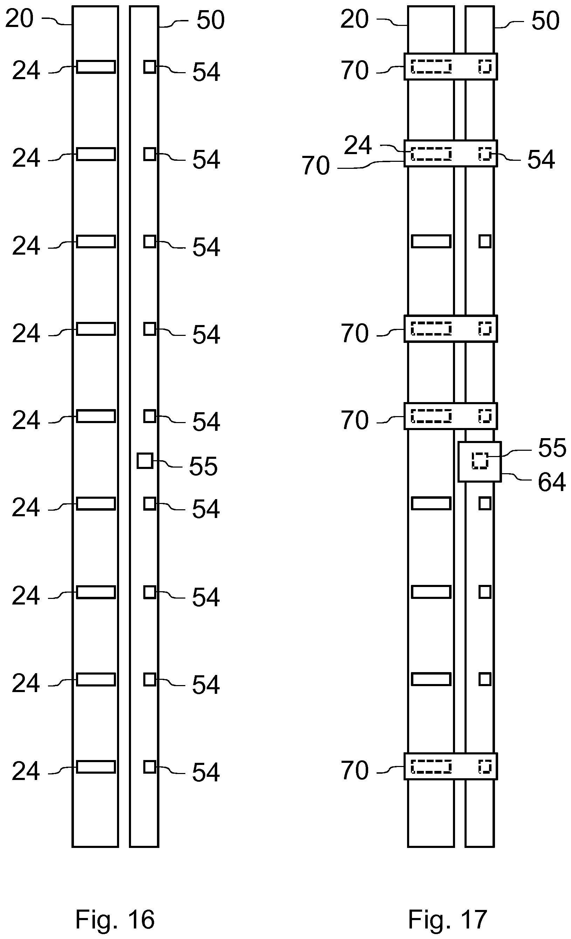

Comme représenté sur la figure 16, chaque jeu de barres 20 de l'ensemble de jeux de barres comporte des points de connexion 24 à différents emplacements répartis selon sa longueur et chaque ensemble de liaisons de données 50 comporte des points de connexion 54 à différents emplacements répartis selon sa longueur. Les points de connexion 54 sont disposés chacun à proximité (ou en regard) d'un point de connexion 24 du jeu de barres 20 auquel est associé l'ensemble de liaisons de données 50, de façon à former des couples de points de connexion comprenant chacun un point de connexion 24 du jeu de barres et un point de connexion 54 de l'ensemble de liaisons de données associé. Dans un exemple particulier de réalisation, deux couples consécutifs de points de connexion sont espacés d'une distance d'environ 50 à 70cm. Cette distance correspond par exemple à la distance entre deux cadres structurels de l'aéronef.

Bien que le réseau mixte de distribution de puissance électrique et de communication de données 600 ait été décrit dans le cas particulier où il comprend 2 sous réseaux 160, 160a et 260, 260a, le troisième aspect de l'invention n'est aucunement limité à ce nombre de sous réseaux. Par exemple, le réseau mixte 600 peut comporter 4 sous réseaux empruntant des chemins ségrégués dans le fuselage de l'aéronef, de la même façon que le réseau de distribution de puissance électrique 200 conforme au premier aspect de l'invention peut comporter 4 jeux de barres empruntant des chemins ségrégués dans le fuselage.

Dans un mode avantageux de réalisation, au moins un jeu de barres 20 de l'ensemble de jeux de barres comprend au moins deux tronçons modulaires disposés bout à bout et reliés électriquement entre eux. Cet au moins un jeu de barres fait partie d'un des sous réseaux 160, 160a ou 260, 260a. Chacun desdits au moins deux tronçons modulaires de l'au moins un jeu de barres fait partie d'un élément modulaire comprenant également un ensemble de liaisons de données s'étendant de façon sensiblement parallèle au tronçon modulaire considéré. Un tel élément modulaire correspond par exemple à l'élément modulaire 60 conforme à un mode de réalisation du deuxième aspect de l'invention. Les ensembles de liaisons de données d'éléments modulaires consécutifs sont reliés entre eux de façon à former l'ensemble de liaisons de données 50 associé au jeu de barres 20 considéré.

De façon avantageuse, le réseau mixte de distribution de puissance électrique et de communication de données 600 comporte un ensemble de boîtes de dérivation, chaque boîte de dérivation 70 étant raccordée à un couple de points de connexion 24, 54 comme représenté sur la figure 17. Ces boîtes de dérivation sont prévues pour permettre le raccordement des équipements électriques de l'aéronef aux points de connexion 24 du jeu de barres 20 et aux points de connexion 54 de l'ensemble de liaisons de données 50. De façon avantageuse encore, le nombre de boîtes de dérivation 70 installées sur les sous-réseaux de distribution de puissance électrique et de distribution de données est fonction de la densité des équipements électriques dans le fuselage F de l'aéronef. Par exemple, dans des zones du fuselage où la densité d'équipements électriques est moyenne, les boîtes de dérivation peuvent être installées tous les 4 ou 5 couples de points de connexion 24, 54, comme représenté en partie inférieure de la figure 17. Dans des zones du fuselage où la densité des équipements électriques est plus élevée, les boîtes de dérivation peuvent être installées tous les 2 couples de points de connexion, voire sur chaque couple de points de connexion, comme représenté en partie supérieure de la figure 17.

De façon avantageuse encore, l'ensemble de liaisons de données 50 comporte au moins un point de connexion particulier, dit point de brassage 55. Cet au moins un point de brassage 55 est prévu pour recevoir une baie de brassage 64. L'ensemble de liaisons de données 50 comporte des liaisons de données entre le point de brassage 55 et différents points de connexion 54. La baie de brassage permet de relier entre elles lesdites liaisons de données au moyen de jarretières.

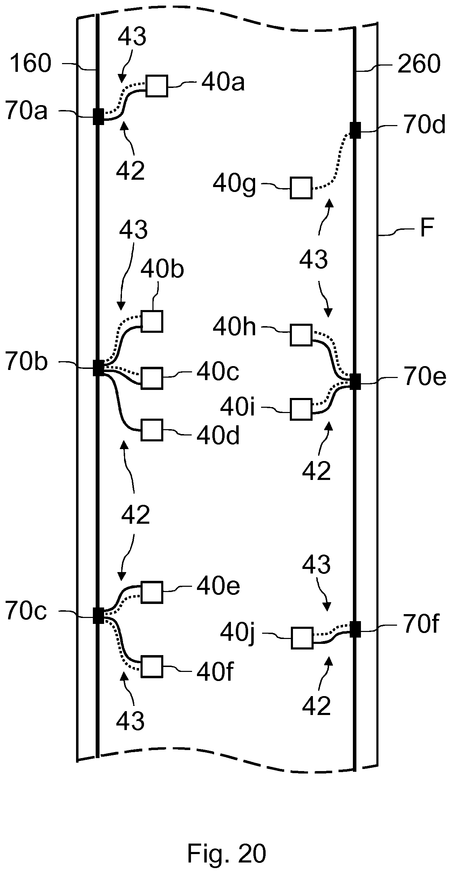

Chacun des équipements électriques de l'ensemble d'équipements électriques est relié à un couple de points de connexion via une liaison d'alimentation électrique locale 42 et/ou via une liaison de données locale 43, comme représenté sur la figure 20. L'aéronef 1 comporte un ensemble d'équipements électriques 40a ... 40j dans la partie du fuselage F représentée sur la figure. Ces équipements électriques nécessitent chacun une alimentation électrique pour fonctionner, sauf l'équipement 40g qui est autonome en énergie. Les équipements électriques, sauf l'équipement 40d, nécessitent également chacun une liaison de données. Chaque équipement électrique est relié à un seul couple de points de connexion, au moyen desdites liaisons locales 42 et/ou 43, de préférence via une boîte de dérivation 70a ... 70f. Dans la partie de fuselage représentée sur la figure, la partie 160 du premier sous-réseau est équipée de 3 boîtes de dérivation 70a, 70b, 70c et la partie 260 du deuxième sous-réseau est équipée de 3 boîtes de dérivation 70d, 70e, 70f. L'équipement électrique 40a est relié à la boîte de dérivation 70a par une liaison d'alimentation électrique locale 42 et par une liaison de données locale 43. Les équipements électriques 40b et 40c sont reliés à la boîte de dérivation 70b par une liaison d'alimentation électrique locale 42 et par une liaison de données locale 43. L'équipement électrique 40d est relié à la boîte de dérivation 70b uniquement par une liaison d'alimentation électrique locale 42. Les équipements électriques 40e et 40f sont reliés à la boîte de dérivation 70c par une liaison d'alimentation électrique locale 42 et par une liaison de données locale 43. L'équipement électrique 40g est relié à la boîte de dérivation 70d uniquement par une liaison de données locale 43. Les équipements électriques 40h et 40i sont reliés à la boîte de dérivation 70e par une liaison d'alimentation électrique locale 42 et par une liaison de données locale 43. L'équipement électrique 40j est relié à la boîte de dérivation 70f par une liaison d'alimentation électrique locale 42 et par une liaison de données locale 43. Dans un exemple particulier de réalisation, les boîtes de dérivation 70a, 70b, 70c d'une part et 70d, 70e, 70f d'autre part sont installées tous les 4 ou 5 couples de points de connexion, respectivement sur la partie 160 du premier sous-réseau et sur la partie 260 du deuxième sous-réseau. Lorsque les couples de points de connexion sont espacés par exemple de 50cm, deux boîtes de dérivation consécutives sont alors espacées d'environ 2 mètres.

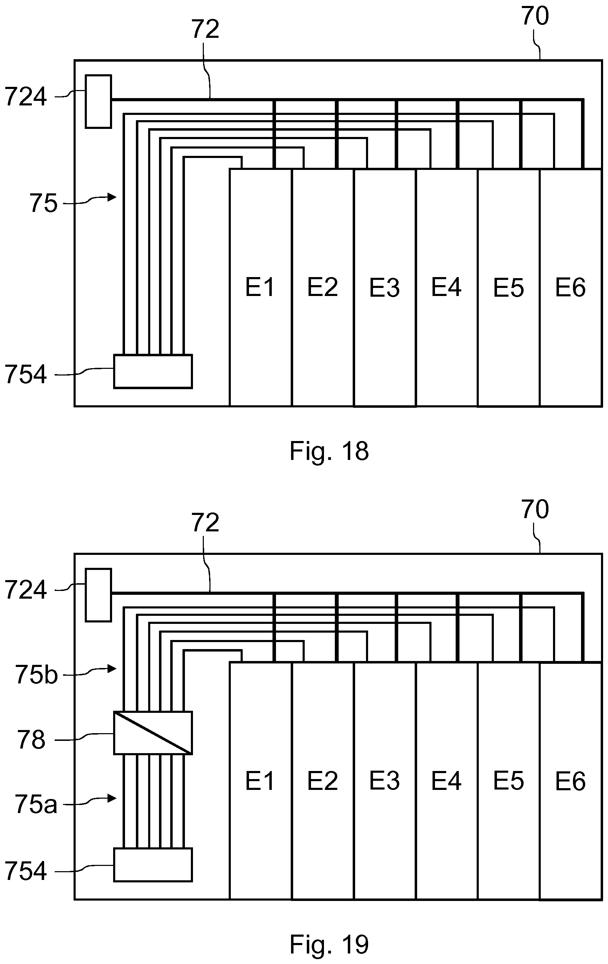

Dans un mode de réalisation représenté sur la figure 18, une boîte de dérivation 70 comporte un connecteur d'alimentation électrique 724, un connecteur de liaisons de données 754 et un ensemble d'emplacements E1, E2, ... E6 prévus pour recevoir chacun un module d'interface. Le connecteur d'alimentation électrique 724 est prévu pour coopérer avec le point de connexion 24 du couple de points de connexion auquel est raccordée la boîte de dérivation. Le connecteur de liaison de données 754 est prévu pour coopérer avec le point de connexion 54 de l'ensemble de liaisons de données appartenant au couple de points de connexion auquel est raccordée la boîte de dérivation. Ce connecteur de liaison de données correspond par exemple à au moins un connecteur multi fibres optiques lorsque les liaisons de données du réseau de distribution 600 correspondent à des fibres optiques. La boîte de dérivation 70 comprend également un ensemble de liaisons électriques 72 s'étendant entre le connecteur d'alimentation électrique 724 et les différents emplacements E1, E2, ... E6 prévus pour recevoir les modules d'interface, ainsi qu'un ensemble de liaisons de données 75 s'étendant entre le connecteur de liaisons de données 754 et les différents emplacements prévus pour recevoir les modules d'interface.

Dans une variante représentée sur la figure 19, les liaisons de données du réseau de distribution 600 correspondent à des fibres optiques et la boîte de dérivation 70 comporte en outre un convertisseur de liaisons de données 78. Ce convertisseur est prévu pour convertir des communications par fibres optiques en communications filaires et réciproquement. L'ensemble de liaisons de données 75 comprend alors des liaisons de données par fibres optiques 75a entre le connecteur de liaisons de données 754 et le convertisseur de liaisons de données 78, ainsi que des liaisons de données 75b utilisant des signaux électriques entre le convertisseur de liaisons de données 78 et les différents emplacements E1, E2, ... E6 prévus pour recevoir les modules d'interface. Cette variante présente l'avantage de permettre des communications par fibres optiques sur l'ensemble de liaisons de données du réseau mixte 600 de distribution de puissance électrique et de communication de données. Ces communications sont ainsi insensibles à des perturbations électromagnétiques. Ces communications par fibres optiques sont transformées en communications filaires dans la boîte de dérivation 70, ce qui permet une connexion filaire des liaisons de données 75b avec les modules d'interface susceptibles d'être installés dans les emplacements E1, E2, ... E6. Une telle connexion filaire présente une meilleure fiabilité qu'une connexion optique dans la mesure où les modules d'interfaces sont susceptibles d'être remplacés ou déplacés. En effet, une telle connexion filaire est moins sensible à la poussière et aux vibrations qu'une connexion optique.

Dans un exemple de réalisation, les connecteurs 724 et 754 sont disposés sur une face arrière de la boîte de dérivation 70. Les liaisons électriques 72 et les liaisons de données 75 sont réalisées au moyen d'une carte fond de panier de la boîte de dérivation. Ces liaisons arrivent sur des connecteurs de la carte fond de panier, disposés en regard des emplacements E1, E2, ... E6 de telle façon que les modules d'interface susceptibles d'être installés dans lesdits emplacements puissent s'enficher sur ces connecteurs.

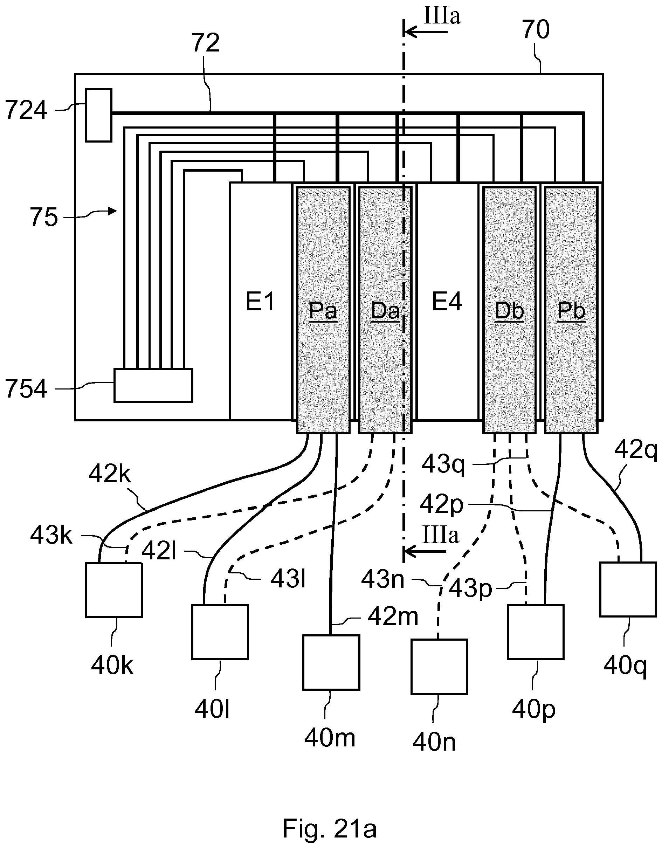

Dans un premier mode particulier de réalisation représenté sur la figure 21a, des équipements électriques 40k ... 40q sont raccordés à des modules d'interface électrique Pa, Pb par des liaisons d'alimentation électrique locales 42k ... 42q et/ou à des modules d'interface de liaison de données Da, Db par des liaisons de données locales 43k ... 43q. Dans l'exemple représenté sur la figure, les modules d'interface électrique Pa, Pb sont respectivement installés dans les emplacements E2, E6 de la boîte de dérivation 70 et les modules d'interface de liaison de données Da, Db sont respectivement installés dans les emplacements E3, E5 de la boîte de dérivation 70. Dans ce premier mode de réalisation, un équipement électrique qui nécessite une alimentation électrique et une liaison de données est relié à un module d'interface électrique par une liaison d'alimentation électrique locale et à un module d'interface de liaison de données par une liaison de données locale. Par exemple, l'équipement électrique 40k est relié au module d'interface électrique Pa par une liaison d'alimentation électrique locale 42k et au module d'interface de liaison de données Da par une liaison de données locale 43k. De façon avantageuse, les liaisons d'alimentation électrique locales 42k ... 42q et les liaisons de données locales 43k ... 43q sont terminées par des connecteurs susceptibles de coopérer avec des connecteurs des modules d'interface. De façon avantageuse encore, la face arrière de la boîte de dérivation 70 comporte des supports prévus pour maintenir en position les connecteurs des liaisons d'alimentation électrique locales et des liaisons de données locales, de telle façon que ces connecteurs soient raccordés aux connecteurs correspondants des modules d'interface lorsque les modules d'interface sont installés dans leurs emplacements respectifs de la boîte de dérivation. Cela permet avantageusement de retirer et de mettre en place les modules d'interface dans les emplacements E1, E2, ... E6 de la boîte de dérivation sans devoir manipuler les connecteurs des différentes liaisons de données. Cela permet également d'éviter alors des erreurs de connexion desdites liaisons.

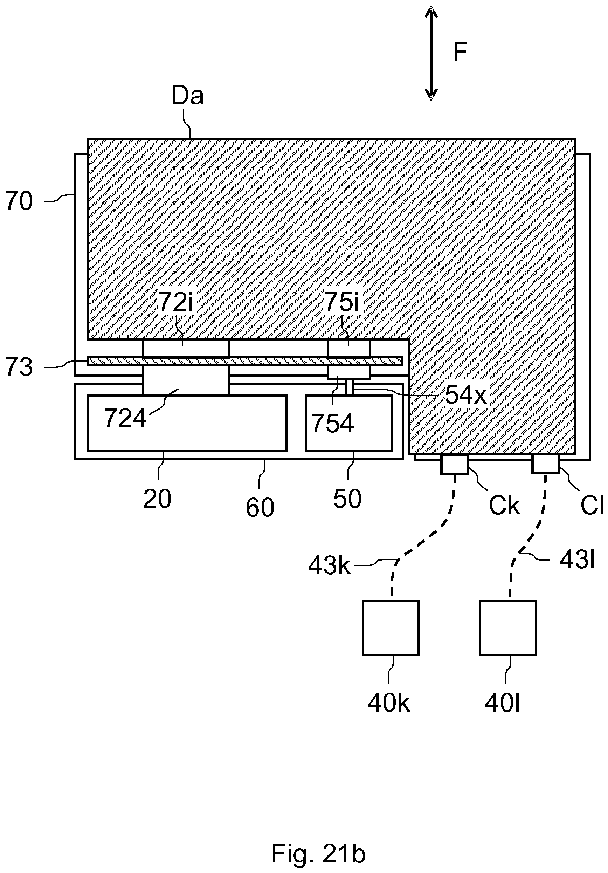

Dans un exemple représenté sur la figure 21b, la boîte de dérivation comporte une carte fond de panier 73. Les connecteurs 724 et 754 sont solidaires de la carte fond de panier. Ces connecteurs sont disposés de façon telle que lorsque la boîte de dérivation est installée sur un couple de points de connexion, comme représenté sur la figure, le connecteur d'alimentation électrique 724 est relié au point de connexion du jeu de barres 20 et le connecteur de liaisons de données 754 peut recevoir un connecteur d'une extrémité 54x de liaisons de données du point de connexion de l'ensemble de liaisons de données 50. Sur la figure, le module d'interface Da est représenté inséré dans un emplacement de la boîte de dérivation 70. Ce module d'interface est relié à la carte fond de panier 73 au moyen d'un connecteur d'alimentation électrique 72i est d'un connecteur de liaisons de données 75i. Le flèche F représente une direction d'extraction (vers le haut sur la figure) et d'insertion (vers le bas sur la figure) du module d'interface dans la boîte de dérivation 70. Les liaisons de données locales 43k et 43l vers les équipements électriques 40k et 40l sont terminées par des connecteurs respectifs Ck et Cl reliés au module d'interface. De façon avantageuse, comme indiqué précédemment, la face arrière de la boîte de dérivation 70 (représentée en bas sur la figure) comporte des supports non représentés prévus pour maintenir en position les connecteurs Ck et Cl. Bien que cet exemple soit décrit pour le module d'interface Da, il n'est aucunement limité à ce module d'interface et il peut s'appliquer à l'ensemble des modules d'interface de la boîte de dérivation.

De façon particulière, chaque module d'interface électrique est choisi parmi l'ensemble suivant :
- un module de connexion électrique, permettant d'établir une connexion électrique entre des conducteurs du jeu de barres, via les liaisons électriques 72 de la boîte de dérivation, et les connecteurs prévus pour des liaisons d'alimentation électrique locales vers des équipements électriques ;
- un module de commutation électrique permettant de commander l'alimentation électrique d'un équipement électrique depuis un système distant. Ce module de commutation électrique comporte un commutateur placé en série sur une connexion électrique entre des conducteurs du jeu de barres (via les liaisons électriques 72 de la boîte de dérivation) et un connecteur prévu pour une liaison d'alimentation électrique locale vers ledit équipement électrique. Le module de commutation est relié au système distant via l'une des liaisons de données 75. En fonction d'ordres reçus du système distant, le module de commutation commande l'ouverture ou la fermeture du commutateur de façon à commander l'alimentation électrique de l'équipement électrique ;
- un module de conversion de tension électrique qui comprend un convertisseur alimenté à partir des tensions électriques présentes sur des conducteurs du jeu de barres, via les liaisons électriques 72 de la boîte de dérivation. Ce convertisseur correspond par exemple à un transformateur, à un convertisseur de tension continu-continu, à un ensemble transformateur-redresseur, etc. Au moins une sortie du convertisseur est reliée à un connecteur prévu pour une liaison d'alimentation électrique locale vers un équipement électrique ; et
- un module de protection électrique. Ce module de protection électrique comporte un disjoncteur placé en série sur une connexion électrique entre des conducteurs du jeu de barres (via les liaisons électriques 72 de la boîte de dérivation) et un connecteur prévu pour une liaison d'alimentation électrique locale vers un équipement électrique.

De façon particulière encore, chaque module d'interface de liaison de données est choisi parmi l'ensemble suivant :
- un module de connexion de liaisons de données, permettant d'établir au moins une connexion entre une liaison de données de l'ensemble de liaisons de données 50 associé au jeu de barres 20, via l'une des liaisons 75 de la boîte de dérivation, et un connecteur prévu pour une liaison de données locale vers un équipement électrique ;
- un module de conversion de liaisons de données. Ce module comporte un convertisseur relié à une liaison de données de l'ensemble de liaisons de données 50 associé au jeu de barres 20, via l'une des liaisons 75 de la boîte de dérivation. Par ailleurs, ce convertisseur est relié à un connecteur prévu pour une liaison de données locale vers un équipement électrique. Par exemple, ce convertisseur permet de convertir une liaison de données optique sur l'ensemble de liaisons de données en une liaison de données filaire sur la liaison de données locale. Dans un autre exemple, ce convertisseur permet de convertir une liaison de données de type Ethernet sur l'ensemble de liaisons de données en une liaison de données de type USB sur la liaison de données locale ;
- un module de liaison de données sans fil. Ce module comporte un émetteur-récepteur de communication sans fil, relié à une liaison de données de l'ensemble de liaisons de données 50 associé au jeu de barres 20, via l'une des liaisons 75 de la boîte de dérivation. Les liaisons de données locales entre ce module d'interface et des équipements électriques sont alors de type sans fil, par exemple de type WiFi ; et
- un module d'acquisition et de concentration de données. Les équipements électriques reliés à ce module par des liaisons de données locales sont par exemple des capteurs. Le module comporte un circuit électronique relié à une liaison de données de l'ensemble de liaisons de données 50 associé au jeu de barres 20, via l'une des liaisons 75 de la boîte de dérivation. Ce circuit électronique est prévu pour acquérir des données fournies par les capteurs, pour concentrer des données provenant de différents capteurs et pour transmettre ces données sur ladite liaison de données de l'ensemble de liaisons de données.

De façon particulière, la boîte de dérivation 70 peut comprendre un module d'interface mixte assurant une fonction de module d'interface électrique, tel que précité, et une fonction de module d'interface de liaison de données, tel que précité. Dans certaines circonstances, ce module d'interface mixte peut répondre à des contraintes d'encombrement des emplacements de la boîte de dérivation 70.

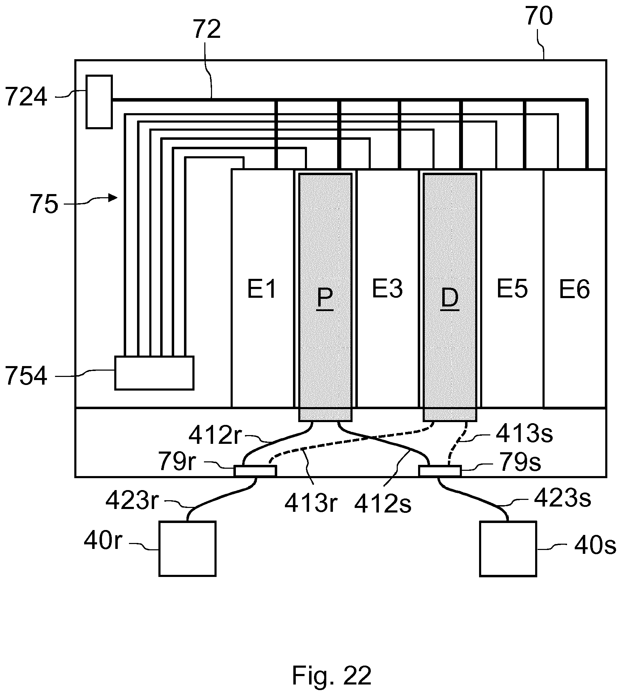

Dans un deuxième mode particulier de réalisation représenté sur la figure 22, des équipements électriques 40r, 40s sont raccordés chacun à un connecteur respectif 79r, 79s de la boîte de dérivation 70, par des liaisons locales respectives 423r, 423s. Ces liaisons locales sont de type mixte alimentation électrique et liaison de données. Le connecteur 79r et le connecteur 79s de la boîte de dérivation sont chacun reliés à un module d'interface électrique P et à un module d'interface de liaison de données D, par des liaisons internes à la boîte de dérivation. Ainsi, le connecteur 79r est relié au module d'interface électrique P par une liaison électrique 412r et au module d'interface de liaison de données D par une liaison de données 413r. Le connecteur 79s est relié au module d'interface électrique P par une liaison électrique 412s et au module d'interface de liaison de données D par une liaison de données 413s. De préférence, le brochage des différents connecteurs 79r, 79s de la boîte de dérivation est similaire pour l'ensemble desdits connecteurs. Cela permet d'utiliser des liaisons locales mixtes identiques entre les différents équipements électriques et les connecteurs des boîtes de dérivation auxquels ces équipements électriques sont raccordés. Il en résulte une simplification des raccordements des équipements électriques au moyen desdites liaisons locales mixtes. Bien que ce deuxième mode particulier de réalisation soit décrit avec deux équipements électriques et deux modules d'interface, il n'est aucunement limité à ces nombres d'équipements électriques et de modules d'interface. De façon avantageuse, comme pour les liaisons locales des équipements électriques du premier mode particulier de réalisation, les liaisons internes 412r, 412s, 413r, 413s sont terminées par des connecteurs susceptibles de coopérer avec des connecteurs des modules d'interface P et D. La face arrière de la boîte de dérivation 70 comporte des supports prévus pour maintenir en position les connecteurs desdites liaisons internes, de telle façon que ces connecteurs soient raccordés aux connecteurs correspondants des modules d'interface lorsque les modules d'interface sont installés dans leurs emplacements respectifs de la boîte de dérivation. Cela permet avantageusement de retirer et de mettre en place les modules d'interface dans les emplacements E1, E2, ... E6 de la boîte de dérivation sans devoir manipuler les connecteurs des différentes liaisons internes. Cela permet également d'éviter alors des erreurs de connexion desdites liaisons.

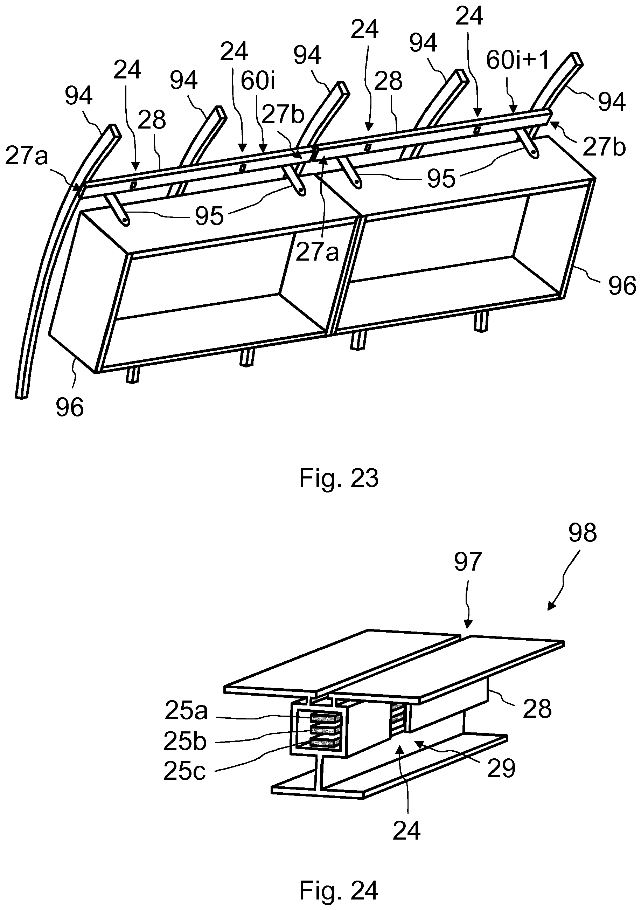

Selon un mode de réalisation conforme au quatrième aspect de l'invention et illustré par la figure 23, des éléments modulaires 60i, 60i+1 pour un réseau de distribution de puissance électrique d'un aéronef, comportent chacun une enveloppe 28. Chaque élément modulaire comporte un tronçon d'un jeu de barres dont les conducteurs électriques, non représentés sur la figure, sont logés dans l'enveloppe 28. Le tronçon de jeu de barres s'étend selon la longueur de l'élément modulaire considéré. Le tronçon de jeu de barres d'un élément modulaire 60i, 60i+1 comporte un premier point d'interconnexion 27a à une première extrémité longitudinale et un deuxième point d'interconnexion 27b à une deuxième extrémité longitudinale. Les premier et deuxième points d'interconnexion 27a et 27b sont prévus pour relier le tronçon de jeu de barres à un tronçon de jeu de barres d'un autre élément modulaire disposé longitudinalement en série avec l'élément modulaire considéré. Ainsi, dans l'exemple représenté sur la figure, le deuxième point d'interconnexion 27b de l'élément modulaire 60i est relié au premier point d'interconnexion 27a de l'élément modulaire 60i+1. De façon avantageuse, la liaison entre les jeux de barres de deux éléments modulaires consécutifs correspond à une connexion permettant d'absorber des déformations longitudinales de l'aéronef. Cette connexion est par exemple réalisée au moyen d'un connecteur prévu pour permettre un coulissement d'éléments conducteurs participant à ladite connexion. L'enveloppe 28 correspond à une pièce structurelle de l'aéronef, en l'occurrence une pièce prévue pour supporter des coffres à bagages 96 dans la cabine de l'aéronef. Cette pièce est par exemple une pièce métallique ou une pièce en matériau composite dont l'épaisseur est choisie pour supporter la masse des coffres à bagages. Lorsque la pièce est métallique, en aluminium, elle comporte par exemple une face d'épaisseur 5mm et d'autres faces d'épaisseur 2mm. L'enveloppe 28 correspondant à chaque élément modulaire 60i, 60i+1 est fixée, par des moyens de fixation non représentés sur la figure, à un ensemble de cadres structurels 94 de l'aéronef. Les enveloppes 28 des différents éléments modulaires supportent les coffres à bagages 96 grâce à des fixations 95. Bien que non obligatoirement, ces fixations 95 peuvent être montées coulissantes sur les enveloppes 28 des éléments modulaires de façon à permettre un coulissement des coffres à bagages selon la longueur du fuselage de l'aéronef. Dans l'exemple représenté sur la figure, la longueur de l'enveloppe 28 correspondant à chaque élément modulaire s'étend le long de deux intercadres du fuselage de l'aéronef. Le terme intercadre désigne ici l'espace entre deux cadres structurels consécutifs du fuselage. Sans sortir du cadre de l'invention, la longueur de l'enveloppe 28 pourrait aussi s'étendre selon un seul intercadre ou selon un nombre plus élevé d'intercadres. Le tronçon de jeu de barres d'un élément modulaire comporte des points de connexion 24 à différents emplacements répartis selon sa longueur. Une ouverture de l'enveloppe 28 est prévue en regard de chaque point de connexion 24 de façon à permettre le raccordement d'au moins un équipement électrique de l'aéronef au tronçon de jeu de barres au moyen d'une liaison électrique locale. Dans l'exemple représenté sur la figure, les points de connexion sont répartis sur le tronçon de jeu de barres correspondant à chaque élément modulaire de façon à avoir un point de connexion 24 pour chaque intercadre du fuselage de l'aéronef. D'autres dispositions sont possibles sans sortir du cadre de l'invention, par exemple un point de connexion pour deux intercadres du fuselage.

Les éléments modulaires 60i, 60i+1 font partie d'un réseau de distribution de puissance électrique de l'aéronef, par exemple un réseau de distribution de puissance électrique similaire au réseaux 200 ou 600 déjà décrits en référence aux premiers et deuxièmes aspects de l'invention. Dans un mode avantageux de réalisation, chaque élément modulaire comporte en outre un ensemble de liaisons de données, de façon similaire aux éléments modulaires décrits en référence au deuxième aspect de l'invention. Par conséquent, ce mode avantageux de réalisation n'est pas décrit davantage, tous les modes de réalisation décrits en référence au deuxième aspect de l'invention étant également applicables.

Dans un autre mode de réalisation illustré par la figure 24, l'enveloppe 28 d'un tronçon de jeux de barres d'un élément modulaire fait partie d'un tronçon de rail de plancher 98 d'un aéronef. A ce titre, elle correspond à une pièce structurelle de l'aéronef. Le rail de plancher peut correspondre à un rail de plancher non prévu pour fixer des sièges ou encore à un rail de sièges prévu pour la fixation de sièges dans la cabine passagers de l'aéronef. Pour des raisons de lisibilité, seule une partie de la longueur du tronçon de rail de plancher 98 est représentée sur la figure. D'un point de vue électrique, chaque élément modulaire est similaire aux éléments modulaires 60i, 60i+1 décrits en référence à la figure 23. Ainsi, ces éléments modulaires peuvent être disposés en série et reliés entre eux par des points d'interconnexion 27a, 27b. Chaque élément modulaire correspondant à un tronçon de rail de plancher de l'aéronef, la mise en série de tronçons de rail de plancher dans la cabine du fuselage de l'aéronef, pour réaliser un rail de plancher, permet de construire un réseau de distribution de puissance électrique de l'aéronef. Dans l'exemple de réalisation représenté sur la figure, trois éléments conducteurs 25a, 25b, 25c du tronçon de jeu de barres sont logés dans l'enveloppe 28. Cet exemple n'est toutefois pas limitatif du nombre de conducteurs que peut comporter le jeu de barres. De préférence, les éléments conducteurs sont disposés de façon horizontale à l'intérieur de l'enveloppe 28, de façon à permettre la réalisation de points de connexion 24 sur une face latérale du tronçon de rail de plancher 98. Le terme horizontal signifie ici que les éléments conducteurs sont disposés de façon horizontale lorsque le tronçon de rail de plancher est installé sur un plancher de la cabine du fuselage de l'aéronef, l'aéronef étant stationné au sol. Une ouverture 29 de l'enveloppe 28 est prévue en regard de chaque point de connexion 24 de façon à permettre le raccordement d'au moins un équipement électrique de l'aéronef au tronçon de jeu de barres au moyen d'une liaison électrique locale. De façon conventionnelle, lorsque le rail de plancher est un rail de sièges, la partie supérieure du rail de sièges comporte une rainure 97 permettant la fixation de sièges.

Les différents modes de réalisation, exemples, variantes et alternatives décrits en relation avec les différents aspects de l'invention peuvent être combinés entre eux sans sortir du cadre de l'invention. Par exemple, de façon non limitative, le réseau de distribution de puissance électrique 200 d'un aéronef conforme au premier aspect de l'invention peut être réalisé en assemblant des éléments modulaires 60 conformes au deuxième aspect de l'invention. De la même façon, le réseau mixte de distribution de puissance électrique et de communication de données 600 conforme au troisième aspect de l'invention peut être réalisé en assemblant des éléments modulaires conformes au deuxième aspect de l'invention. Par exemple encore, les boîtes de dérivation 68 décrites en relation avec le deuxième aspect de l'invention peuvent être similaires aux boîtes de dérivation 70 décrites plus en détail en relation avec le troisième aspect de l'invention.

## Revendications

1. Elément modulaire (60) pour un réseau mixte de distribution de puissance électrique et de communication de données (600) d'un aéronef, **caractérisé en ce qu'**il comporte :
- un tronçon d'un jeu de barres de distribution de puissance électrique (20t), s'étendant selon une longueur (L) de l'élément modulaire ; et
- un ensemble de liaisons de données (50t), cet ensemble de liaisons de données s'étendant selon ladite longueur de l'élément modulaire, de façon parallèle au tronçon de jeu de barres (20t),
et **en ce que** :
- le tronçon de jeu de barres comporte des points de connexion (24) à différents emplacements répartis selon sa longueur ;
- l'ensemble de liaisons de données comporte des points de connexion (54) à différents emplacements répartis selon sa longueur et disposés chacun à proximité d'un point de connexion (24) du tronçon de jeu de barres ;
- l'ensemble de liaisons de données (50t) comporte un point de connexion, dit point de brassage (55, 55a, 55b), prévu pour recevoir une baie de brassage (64) ;
- l'ensemble de liaisons de données (50t) comporte au moins une liaison de données (56) entre d'une part chacun des points de connexion (54) répartis selon sa longueur et d'autre part le point de brassage (55, 55a, 55b) ;
- le tronçon de jeu de barres (20t) et l'ensemble de liaisons de données (50t) comportent chacun un premier point d'interconnexion (27a, 57a) prévu pour relier le tronçon de jeu de barres et l'ensemble de liaisons de données respectivement à un tronçon de jeu de barres et à un ensemble de liaisons de données d'un premier autre élément modulaire disposé longitudinalement en série avec l'élément modulaire, à une première extrémité longitudinale (Ext1) de l'élément modulaire ; et
- le tronçon de jeu de barres et l'ensemble de liaisons de données comportent chacun un deuxième point d'interconnexion (27b, 57b) prévu pour relier le tronçon de jeu de barres et l'ensemble de liaisons de données respectivement à un tronçon de jeu de barres et à un ensemble de liaisons de données d'un deuxième autre élément modulaire disposé longitudinalement en série avec l'élément modulaire, à une deuxième extrémité longitudinale (Ext2) de l'élément modulaire opposée à la première extrémité longitudinale (Ext1).

2. Elément modulaire selon la revendication 1, **caractérisé en ce que** les liaisons de données (56, 58) correspondent à des fibres optiques.

3. Elément modulaire selon l'une des revendications 1 ou 2, **caractérisé en ce que** le point de brassage (55, 55a, 55b) comporte un sous-ensemble de liaisons de données terminées par au moins un connecteur, dit connecteur de brassage, prévu pour être intégré dans la baie de brassage (64).

4. Elément modulaire selon la revendication 3, **caractérisé en ce que** le point de brassage comporte en outre au moins une fixation prévue pour permettre la fixation de la baie de brassage sur l'élément modulaire.

5. Elément modulaire selon l'une des revendications 3 ou 4, **caractérisé en ce que** :
- le point de brassage (55a) d'une part et le premier point d'interconnexion (57a) de l'ensemble de liaisons de données d'autre part sont situés à proximité de la première extrémité longitudinale (Ext1) de l'élément modulaire ;
- le premier point d'interconnexion (57a) de l'ensemble de liaisons de données comporte un sous-ensemble de liaisons de données (58) terminées par au moins un connecteur, dit premier connecteur d'interconnexion ; et
- l'agencement du point de brassage (55a) et du premier point d'interconnexion (57a) est prévu pour permettre l'intégration du connecteur de brassage et du premier connecteur d'interconnexion dans la baie de brassage (64), de façon à permettre de relier l'ensemble de liaisons de données (50t) à l'ensemble de liaisons de données du premier autre élément modulaire, dans la baie de brassage.

6. Elément modulaire selon l'une quelconque des revendications précédentes, **caractérisé en ce que** :
- les points de connexion (24) répartis le long du tronçon de jeu de barres (20t) et les points de connexion (54) répartis le long de l'ensemble de liaisons de données (50t), disposés chacun à proximité d'un point de connexion (24) du tronçon de jeu de barres, forment des couples de points de connexion répartis le long de l'élément modulaire ; et
- chaque couple de points de connexion est prévu pour recevoir une boîte de dérivation mixte de distribution de puissance électrique et de communication de données (68) configurée pour permettre le raccordement d'une ou de plusieurs liaisons locales de distribution d'alimentation électrique et/ou de distribution de données vers un ou plusieurs équipements électriques (40a ... 40j) de l'aéronef.

7. Elément modulaire selon l'une quelconque des revendications précédentes, **caractérisé en ce que** le tronçon de jeu de barres (20t) comporte au moins une partie flexible prévue pour permettre des déformations de l'élément modulaire en réponse à des déformations d'un fuselage (F) d'un aéronef (1) lorsque l'élément modulaire est installé dans ledit fuselage d'un aéronef.

8. Aéronef (1), comportant un fuselage (F) et un ensemble d'équipements électriques (40a ... 40j) répartis dans le fuselage, **caractérisé en ce que** :
- l'aéronef comporte un réseau mixte de distribution de puissance électrique et de communication de données (600) comprenant un ensemble d'éléments modulaires (60) selon l'une quelconque des revendications précédentes ; et
- chacun des équipements électriques (40a ... 40j) de l'ensemble d'équipements électriques est relié à un point de connexion (24) du tronçon de jeu de barres (20t) d'un élément modulaire via une liaison d'alimentation électrique locale (42) et/ou à un point de connexion (54) de l'ensemble de liaisons de données (50t) dudit élément modulaire par une liaison de données locale (43).

9. Aéronef selon la revendication 8, **caractérisé en ce que** :
- des éléments modulaires (60a ... 60h) d'un premier sous-ensemble de l'ensemble d'éléments modulaires sont assemblés entre eux de façon à former un premier sous-réseau mixte de distribution de puissance électrique et de communication de données (160, 160a) s'étendant, au moins en partie, longitudinalement dans le fuselage (F) de l'aéronef ;
- des éléments modulaires (60i ... 60q) d'un deuxième sous-ensemble de l'ensemble d'éléments modulaires sont assemblés entre eux de façon à former un deuxième sous-réseau mixte de distribution de puissance électrique et de communication de données (260, 260a) s'étendant, au moins en partie, longitudinalement dans le fuselage de l'aéronef ; et
- le premier sous-réseau et le deuxième sous-réseau empruntent des chemins ségrégués dans le fuselage.

10. Aéronef selon l'une des revendications 8 ou 9, **caractérisé en ce que** deux éléments modulaires consécutifs (60i, 60i+1) sont reliés entre eux électriquement au moyen :
- d'au moins une connexion flexible ; ou
- d'au moins un élément de connexion configuré pour coulisser sur le tronçon d'un jeu de barres d'au moins l'un des deux éléments modulaires.

11. Aéronef selon l'une quelconque des revendications 8 à 10 combinées avec la revendication 5, **caractérisé en ce que** la baie de brassage (64) d'un élément modulaire (60i+1) reçoit :
- un connecteur d'interconnexion (57b) du premier autre élément modulaire (60i) ; et
- un ensemble de liaisons entre le premier connecteur d'interconnexion (57a) de l'élément modulaire (60i+1) et le connecteur d'interconnexion (57b) du premier autre élément modulaire (60i).

## Patentansprüche

1. Modulares Element (60) für ein gemischtes Stromverteilungs- und Datenkommunikationsnetz (600) eines Luftfahrzeugs, **dadurch gekennzeichnet, dass** es aufweist:
- einen Abschnitt einer Sammelschiene zur Stromverteilung (20t), der sich über eine Länge (L) des modularen Elements erstreckt; und
- eine Menge von Datenverbindungen (50t), wobei sich diese Menge von Datenverbindungen über die Länge des modularen Elements parallel zu dem Sammelschienenabschnitt (20t) erstreckt,
und dadurch, dass:
- der Sammelschienenabschnitt Verbindungspunkte (24) an verschiedenen Stellen aufweist, die über seine Länge verteilt sind;
- die Menge von Datenverbindungen Verbindungspunkte (54) an verschiedenen Stellen aufweist, die über ihre Länge verteilt sind und jeweils in der Nähe eines Verbindungspunktes (24) des Sammelschienenabschnitts angeordnet sind;
- die Menge von Datenverbindungen (50t) einen Verbindungspunkt aufweist, Querverbindungspunkt genannt (55, 55a, 55b), der dafür vorgesehen ist, ein Querverbindungsfeld (64) aufzunehmen;
- die Menge von Datenverbindungen (50t) mindestens eine Datenverbindung (56) zwischen einerseits jedem der Verbindungspunkte (54), die über ihre Länge verteilt sind, und andererseits dem Querverbindungspunkt (55, 55a, 55b) aufweist;
- der Sammelschienenabschnitt (20t) und die Menge von Datenverbindungen (50t) jeweils einen ersten Zusammenschaltungspunkt (27a, 57a) aufweisen, der dafür vorgesehen ist, den Sammelschienenabschnitt bzw. die Menge von Datenverbindungen mit einem Sammelschienenabschnitt bzw. einer Menge von Datenverbindungen eines ersten anderen modularen Elements zu verbinden, das an einem ersten Längsende (Ext1) des modularen Elements in Längsrichtung in Reihe mit dem modularen Element angeordnet ist; und
- der Sammelschienenabschnitt und die Menge von Datenverbindungen jeweils einen zweiten Zusammenschaltungspunkt (27b, 57b) aufweisen, der dafür vorgesehen ist, den Sammelschienenabschnitt bzw. die Menge von Datenverbindungen mit einem Sammelschienenabschnitt bzw. einer Menge von Datenverbindungen eines zweiten anderen modularen Elements zu verbinden, das an einem zweiten Längsende (Ext2) des modularen Elements, das dem ersten Längsende (Ext1) gegenüberliegt, in Längsrichtung in Reihe mit dem modularen Element angeordnet ist.

2. Modulares Element nach Anspruch 1, **dadurch gekennzeichnet, dass** die Datenverbindungen (56, 58) Lichtwellenleitern entsprechen.

3. Modulares Element nach einem der Ansprüche 1 oder 2, **dadurch gekennzeichnet, dass** der Querverbindungspunkt (55, 55a, 55b) eine Untermenge von Datenverbindungen aufweist, die durch mindestens einen Verbinder abgeschlossen sind, Querverbindungsverbinder genannt, der dafür vorgesehen ist, in das Querverbindungsfeld (64) integriert zu werden.

4. Modulares Element nach Anspruch 3, **dadurch gekennzeichnet, dass** der Querverbindungspunkt außerdem mindestens ein Befestigungselement aufweist das dafür vorgesehen ist, die Befestigung des Querverbindungsfeldes an dem modularen Element zu ermöglichen.

5. Modulares Element nach einem der Ansprüche 3 oder 4, **dadurch gekennzeichnet, dass**:
- der Querverbindungspunkt (55a) einerseits und der erste Zusammenschaltungspunkt (57a) der Menge von Datenverbindungen andererseits sich in der Nähe des ersten Längsendes (Ext1) des modularen Elements befinden;
- der erste Zusammenschaltungspunkt (57a) der Menge von Datenverbindungen eine Untermenge von Datenverbindungen (58) aufweist, die durch mindestens einen Verbinder abgeschlossen sind, erster Zusammenschaltungsverbinder genannt; und
- die Anordnung des Querverbindungspunktes (55a) und des ersten Zusammenschaltungspunktes (57a) dafür vorgesehen ist, die Integration des Querverbindungsverbinders und des ersten Zusammenschaltungsverbinders in das Querverbindungsfeld (64) zu ermöglichen, um so zu ermöglichen, die Menge von Datenverbindungen (50t) mit der Menge von Datenverbindungen des ersten anderen modularen Elements in dem Querverbindungsfeld zu verbinden.

6. Modulares Element nach einem der vorhergehenden Ansprüche, **dadurch gekennzeichnet, dass**:
- die entlang des Sammelschienenabschnitts (20t) verteilten Verbindungspunkte (24) und die entlang der Menge von Datenverbindungen (50t) verteilten Verbindungspunkte (54), die jeweils in der Nähe eines Verbindungspunktes (24) des Sammelschienenabschnitts angeordnet sind, Paare von Verbindungspunkten bilden, die entlang des modularen Elements verteilt sind; und
- jedes Paar von Verbindungspunkten dafür vorgesehen ist, eine gemischte Abzweigdose für Stromverteilung und Datenkommunikation (68) aufzunehmen, die dafür ausgelegt ist, den Anschluss einer oder mehrerer lokaler Verbindungen zur Verteilung der Stromversorgung und/oder Verteilung von Daten zu einer oder mehreren elektrischen Einrichtungen (40a, ..., 40j) des Luftfahrzeugs zu ermöglichen.

7. Modulares Element nach einem der vorhergehenden Ansprüche, **dadurch gekennzeichnet, dass** der Sammelschienenabschnitt (20t) mindestens einen flexiblen Teil aufweist, der dafür vorgesehen ist, Verformungen des modularen Elements in Reaktion auf Verformungen eines Rumpfes (F) eines Luftfahrzeugs (1) zu ermöglichen, wenn das modulare Element in diesem Rumpf eines Luftfahrzeugs installiert ist.

8. Luftfahrzeug (1), welches einen Rumpf (F) und eine Menge von elektrischen Einrichtungen (40a, ..., 40j), die im Rumpf verteilt sind, aufweist, **dadurch gekennzeichnet, dass**:
- das Luftfahrzeug ein gemischtes Stromverteilungs- und Datenkommunikationsnetz (600) aufweist, das eine Menge von modularen Elementen (60) nach einem der vorhergehenden Ansprüche umfasst; und
- jede der elektrischen Einrichtungen (40a, ..., 40j) der Menge von elektrischen Einrichtungen mit einem Verbindungspunkt (24) des Sammelschienenabschnitts (20t) eines modularen Elements über eine lokale Stromversorgungsverbindung (42) und/oder mit einem Verbindungspunkt (54) der Menge von Datenverbindungen (50t) des modularen Elements durch eine lokale Datenverbindung (43) verbunden ist.

9. Luftfahrzeug nach Anspruch 8, **dadurch gekennzeichnet, dass**:
- modulare Elemente (60a, ..., 60h) einer ersten Untermenge der Menge von modularen Elementen so miteinander verbunden sind, dass sie ein erstes gemischtes Stromverteilungs- und Datenkommunikations-Teilnetz (160, 160a) bilden, das sich wenigstens teilweise in Längsrichtung im Rumpf (F) des Luftfahrzeugs erstreckt;
- modulare Elemente (60i, ..., 60q) einer zweiten Untermenge der Menge von modularen Elementen so miteinander verbunden sind, dass sie ein zweites gemischtes Stromverteilungs- und Datenkommunikations-Teilnetz (260, 260a) bilden, das sich wenigstens teilweise in Längsrichtung im Rumpf des Luftfahrzeugs erstreckt; und
- das erste Teilnetz und das zweite Teilnetz über getrennte Wege im Rumpf verlaufen.

10. Luftfahrzeug nach einem der Ansprüche 8 oder 9, **dadurch gekennzeichnet, dass** zwei aufeinander folgende modulare Elemente (60i, 60i+1) elektrisch miteinander verbunden sind mittels:
- mindestens einer flexiblen Verbindung; oder
- mindestens eines Verbindungselements, das dafür ausgelegt ist, auf dem Abschnitt einer Sammelschiene wenigstens eines der zwei modularen Elemente zu gleiten.

11. Luftfahrzeug nach einem der Ansprüche 8 bis 10 in Kombination mit Anspruch 5, **dadurch gekennzeichnet, dass** das Querverbindungsfeld (64) eines modularen Elements (60i+1) aufnimmt:
- einen Zusammenschaltungsverbinder (57b) des ersten anderen modularen Elements (60i); und
- eine Menge von Verbindungen zwischen dem ersten Zusammenschaltungsverbinder (57a) des modularen Elements (60i+1) und dem Zusammenschaltungsverbinder (57b) des ersten anderen modularen Elements (60i).

## Claims

1. Modular element (60) for a mixed electrical power distribution and data communication network (600) of an aircraft, **characterized in that** it comprises:
- a section of an electrical power distribution bus (20t), extending along a length (L) of the modular element; and
- a set of data links (50t), this set of data links extending along said length of the modular element, parallel to the bus section (20t),
and **in that**:
- the bus section comprises connection points (24) at different locations distributed along its length;
- the set of data links comprises connection points (54) at different locations distributed along its length and each arranged in proximity to a connection point (24) of the bus section;
- the set of data links (50t) comprises a connection point, called cross-connect point (55, 55a, 55b), provided to receive a cross-connect rack (64);
- the set of data links (50t) comprises at least one data link (56) between, on the one hand, each of the connection points (54) distributed along its length and, on the other hand, the cross-connect point (55, 55a, 55b);
- the bus section (20t) and the set of data links (50t) each comprise a first point of interconnection (27a, 57a) provided to link the bus section and the set of data links respectively to a bus section and to a set of data links of a first other modular element arranged longitudinally in series with the modular element, at a first longitudinal end (Ext1) of the modular element; and
- the bus section and the set of data links each comprise a second point of interconnection (27b, 57b) provided to link the bus section and the set of data links respectively to a bus section and to a set of data links of a second other modular element arranged longitudinally in series with the modular element, at a second longitudinal end (Ext2) of the modular element opposite the first longitudinal end (Ext1).

2. Modular element according to Claim 1, **characterized in that** the data links (56, 58) correspond to optical fibres.

3. Modular element according to one of Claims 1 and 2, **characterized in that** the cross-connect point (55, 55a, 55b) comprises a subset of data links terminated by at least one connector, called cross-connector, designed to be incorporated in the cross-connect rack (64).

4. Modular element according to Claim 3, **characterized in that** the cross-connect point further comprises at least one fixing designed to allow the cross-connect rack to be fixed to the modular element.

5. Modular element according to one of Claims 3 and 4, **characterized in that**:
- the cross-connect point (55a) on the one hand and the first point of interconnection (57a) of the set of data links on the other hand are situated in proximity to the first longitudinal end (Ext1) of the modular element;
- the first point of interconnection (57a) of the set of data links comprises a subset of data links (58) terminated by at least one connector, called first interconnection connector; and
- the arrangement of the cross-connect point (55a) and of the first point of interconnection (57a) is designed to allow the incorporation of the cross-connect connector and of the first interconnection connector in the cross-connect rack (64), so as to allow the set of data links (50t) to be linked to the set of data links of the first other modular element, in the cross-connect rack.

6. Modular element according to any one of the preceding claims, **characterized in that**:
- the connection points (24) distributed along the bus section (20t) and the connection points (54) distributed along the set of data links (50t), each arranged in proximity to a connection point (24) of the bus section, form pairs of connection points distributed along the modular element; and
- each pair of connection points is designed to receive a mixed electrical power distribution and data communication junction box (68) configured to allow one or more local electrical power distribution and/or data distribution links to be connected to one or more items of electrical equipment (40a ... 40j) of the aircraft.

7. Modular element according to any one of the preceding claims, **characterized in that** the bus section (20t) comprises at least one flexible part designed to allow deformations of the modular element in response to deformations of a fuselage (F) of an aircraft (1) when the modular element is installed in said fuselage of an aircraft.

8. Aircraft (1), comprising a fuselage (F) and a set of electrical equipment items (40a ... 40j) distributed in the fuselage, **characterized in that**:
- the aircraft comprises a mixed electrical power distribution and data communication network (600) comprising a set of modular elements (60) according to any one of the preceding claims; and
- each of the electrical equipment items (40a ... 40j) of the set of electrical equipment items is linked to a connection point (24) of the bus section (20t) of a modular element via a local electrical power supply link (42) and/or to a connection point (54) of the set of data links (50t) of said modular element by a local data link (43).

9. Aircraft according to Claim 8, **characterized in that**:
- modular elements (60a ... 60h) of a first subset of the set of modular element are joined together so as to form a first mixed electrical power distribution and data communication subnetwork (160, 160a) extending, at least partly, longitudinally in the fuselage (F) of the aircraft;
- modular elements (60i ... 60q) of a second subset of the set of modular elements are joined together so as to form a second mixed electrical power distribution and data communication subnetwork (260, 260a) extending, at least partly, longitudinally in the fuselage of the aircraft; and
- the first subnetwork and the second subnetwork take segregated paths in the fuselage.

10. Aircraft according to one of Claims 8 and 9, **characterized in that** two consecutive modular elements (60i, 60i+1) are linked to one another electrically by means:
- of at least one flexible connection; or
- of at least one connection element configured to slide on the section of a bus of at least one of the two modular elements.

11. Aircraft according to any one of Claims 8 to 10 combined with Claim 5, **characterized in that** the cross-connect rack (64) of a modular element (60i+1) receives:
- an interconnection connector (57b) of the first other modular element (60i); and
- a set of links between the first interconnection connector (57a) of the modular element (60i+1) and the interconnection connector (57b) of the first other modular element (60i).
